# EUROPEAN PATENT APPLICATION

(11) **EP 4 365 693 A1**
(43) Date of publication of application: **08.05.2024**
(21) Application number: 22833042.9
(22) Date of filing: 24.06.2022
(51) Int. Cl.: G05B 23/02, G01M 99/00, G05B 19/418

(54) **FACILITY STATE MONITORING SYSTEM**

(30) Priority: 30.06.2021 JP 2021109105; 12.01.2022 JP 2022003330
(71) Applicant: DENSO CORPORATION, Aichi-pref 448-8661 (JP)
(72) Inventor: KOYAMA, Yuji, Kariya-city, Aichi-pref., 448-8661 (JP); MAWATARI, Kazuaki, Kariya-city, Aichi-pref., 448-8661 (JP)
(74) Representative: Winter, Brandl - Partnerschaft mbB
(86) International application number: PCT/JP2022/025386
(87) International publication number: WO 2023/276895

(57) **Abstract**

A facility state monitoring system includes a sensor node (10), a receiver (20) and a state detection unit (30). The sensor node (10) includes a sensor (11) that outputs, as sensor data, data indicating the state of a facility (2) as a monitoring target, a communication unit (13) that transmits the sensor data, and a power supply unit (12) that supplies power to the sensor and the communication unit, and the sensor node (10) is commonly used by multiple monitoring targets. The receiver (20) receives the sensor data transmitted from the communication unit. The state detection unit (30) receives the sensor data received by the receiver, learns, as learning data, normal states of the monitoring targets based on normal sensor data corresponding to normal operations of the monitoring targets. In response to the receiver receiving the sensor data transmitted from the sensor node after learning, the state detection unit compares states of the monitoring targets indicated by the sensor data with the learning data, thereby to detect an abnormality occurrence or symptom in the monitoring targets.

## Description

### CROSS REFERENCE TO RELATED APPLICATION

This application is based on Japanese Patent Application No. 2021-109105 filed on June 30, 2021 and Japanese Patent Application No. 2022-3330 filed on January 12, 2022, the disclosures of which are incorporated herein by reference.

### TECHNICAL FIELD

The present invention relates to a facility state monitoring system that monitors facility abnormalities.

### BACKGROUND ART

Conventionally, there has been known an inspection device for a device that detects an abnormality in operating devices. For example, patent literature 1 proposes an inspection device for a device that includes a vibration sensor, a correlation diagram generation unit, a deep learning unit, and a determination unit, and determines states of a rotating device. Multiple vibration sensors detect the vibration states of the bearings included in the rotating device in operation. Then, the correlation diagram generation unit generates a correlation diagram that indicates the correlation among multiple acceleration signals output from the vibration sensors. The deep learning unit performs deep learning based on the correlation diagram generated by the correlation diagram generation unit. Then, the determination unit determines the state of the rotating portion based on the results of deep learning, making it possible to detect abnormalities in differently configured devices.

### PRIOR ART LITERATURE

### PATENT LITERATURE

Patent Literature 1: JP 2018-091640 A

### SUMMARY OF INVENTION

However, the conventional inspection device requires a large number of vibration sensors to be able to detect anomalies in a large number of operating devices under an environment such as a production line where many devices are operating. Multiple types of sensing are required to detect details of anomalies such as abnormality locations and causes, considering that facility abnormalities are caused by multiple factors. As such, the number of sensors greatly increases, making real-time monitoring difficult.

The present invention has been made in consideration of the foregoing issues. It is an object of the present invention to provide a facility state monitoring system capable of detecting abnormalities in multiple monitoring targets without any need to equip each monitoring target with a vibration sensor, for example.

To achieve the above-described object, a facility state monitoring system according to an aspect of the present disclosure includes: a sensor node that includes a sensor to output, as sensor data, data indicating the state of a facility as a monitoring target to be monitored, a communication unit to transmit the sensor data, and a power supply unit to supply power to the sensor and the communication unit, and is commonly used by a plurality of monitoring targets; a receiver that receives the sensor data transmitted from the communication unit; and a state detection unit that is configured to receive the sensor data received by the receiver, to learn, as learning data, normal states of the monitoring targets based on the normal sensor data corresponding to normal operations of the monitoring targets, and in response to the receiver receiving the sensor data transmitted from the sensor node after learning, to compare states of the monitoring targets indicated by the sensor data with the learning data, thereby to detect an abnormality occurrence or symptom in the monitoring targets.

As described above, at least one common sensor node is used for multiple monitoring targets, and transmits sensor data during the normal operation of the multiple monitoring targets to the state detection unit to enable learning as the normal learning data. The learning data is compared with the states of the multiple monitoring targets indicated by the sensor data transmitted from the sensor node after the learning. Thus, it is possible to detect abnormalities in the multiple monitoring targets without any need to provide each monitoring target with a vibration sensor, for example.

A parenthesized reference numeral assigned to each constituent element exemplarily represents the correspondence relationship between the constituent element and a specific constituent element described in an embodiment to be described later, for example.

### BRIEF DESCRIPTION OF DRAWINGS

FIG. 1 is a block diagram illustrating a facility state monitoring system according to a first embodiment.
FIG. 2A is a schematic diagram illustrating two microphones positioned to shift the directionality 90 degrees.
FIG. 2B is a diagram illustrating a polar pattern when two microphones are positioned as illustrated in FIG. 2A.
FIG. 3A is a diagram illustrating the state of positioning a sound source between the x-axis and the y-axis when two microphones are positioned as illustrated in FIG. 2A.
FIG. 3B is a diagram illustrating the sound pressure received by each microphone when sound is output from the sound source illustrated in FIG. 3A.
FIG. 4A is a diagram illustrating a sound source positioned on the x-axis when two microphones are positioned as illustrated in FIG. 2A.
FIG. 4B is a diagram illustrating the sound pressure received by each microphone when sound is output from the sound source illustrated in FIG. 4A.
FIG. 5 is a diagram illustrating sensor nodes positioned to flow over three transport paths.
FIG. 6 is a transparent perspective view of a sensor node.
FIG. 7 is an exploded view of the sensor node.
FIG. 8 is a diagram illustrating a situation in which the sensor node has the center of gravity at a position above a center in a vertical direction.
FIG. 9 is a diagram illustrating an example in which the sensor node has a vibration suppression structure.
FIG. 10 is a diagram illustrating the vibration suppression structure provided as a through-hole.
FIG. 11 is a diagram illustrating an example in which the sensor node is replaced with a workpiece placed directly on a transport path.
FIG. 12 is a diagram illustrating an example in which the sensor node is replaced with a workpiece placed on a pallet.
FIG. 13 is a diagram illustrating an example in which the sensor node replaced with a workpiece placed on a jig.
FIG. 14 is a diagram illustrating an example in which the sensor node is directly attached to a workpiece.
FIG. 15 is a diagram illustrating an example in which the sensor node is directly attached to a workpiece.
FIG. 16 is a diagram illustrating an example in which the sensor node is directly attached to a pallet.
FIG. 17 is a diagram illustrating an example in which the sensor node is positioned above the vertical center of a workpiece.
FIG. 18 is a diagram illustrating an example in which the sensor node is positioned on the rear of a workpiece in a traveling direction.
FIG. 19 is a diagram illustrating a configuration of the facility state monitoring system including a server.
FIG. 20 is a diagram illustrating an example of history information when the facility state monitoring system functions as a traceability system.
FIG. 21 is a diagram illustrating a situation in which multiple sensor nodes are placed on the transport path.
FIG. 22 is a diagram illustrating another configuration example of a composite sensor.
FIG. 23 is a diagram illustrating another configuration example of the composite sensor.
FIG. 24A is a diagram illustrating a configuration example of one sensor included in the composite sensor.
FIG. 24B is a transparent perspective view illustrating a composite sensor composed of the sensors shown in FIG. 10A.
FIG. 25 is a diagram illustrating a situation in which the sensor node is placed on the transport path.
FIG. 26 is a diagram illustrating frequency characteristics corresponding to a sound pressure measured at the sensor node.
FIG. 27 is a diagram for explaining a method of identifying the positions of a transport path that is divided into multiple sections.
FIG. 28 is a block diagram illustrating details of a state detection unit including functional blocks.
FIG. 29 is a diagram illustrating a situation in which respective facilities are positioned along the transport path.
FIG. 30 is a diagram illustrating abnormality degrees at corresponding positions on the transport path when the sensor node moves over the transport path shown in FIG. 29.
FIG. 31 is a diagram illustrating an example of display of detection results on a display device.
FIG. 32 is a diagram illustrating a method of detecting an abnormality occurrence in multiple transport paths.
FIG. 33 is a diagram illustrating the result of detecting an abnormality occurrence in the transport path displayed on the display device.
FIG. 34 is a block diagram schematically illustrating a sequence of placing orders with parts manufacturers based on a detection result from a state detection unit.
FIG. 35 is a graph illustrating an example of the relationship between energy consumption and production volume.

### DESCRIPTION OF EMBODIMENTS

Hereinafter, embodiments of the present invention will be described with reference to the accompanying drawings. The mutually corresponding or equivalent parts in the following embodiments are designated by the same reference numerals.

### (First embodiment)

First embodiment will be described. A facility state monitoring system 1 according to the present embodiment uses a common sensor node 10 including a sensor 11 to monitor multiple facilities 2 to be monitored for abnormalities.

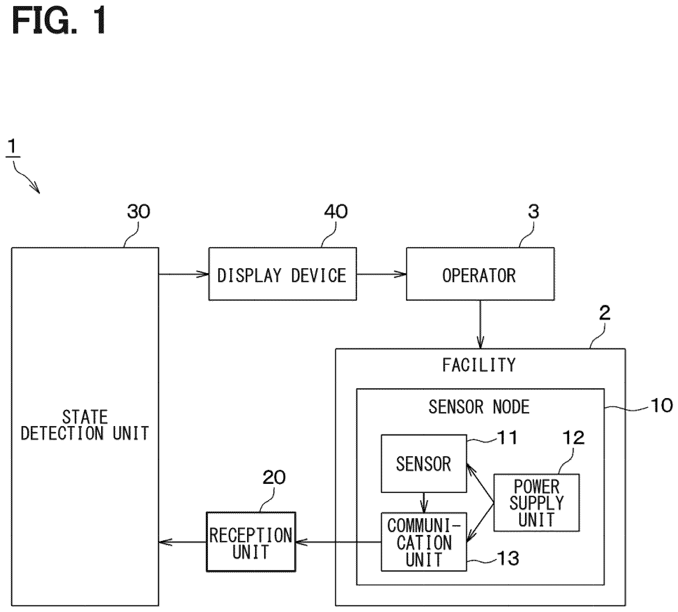

As illustrated in FIG. 1, the facility state monitoring system 1 includes a sensor node 10 to monitor states of the facilities 2 to be monitored, a reception unit 20, a state detection unit 30, and a display device 40. The display device 40 displays monitoring results. Based on the display content on the display device 40, for example, an operator 3 controls, repairs, and replaces parts of the facilities 2 so that the facilities 2 can be maintained in good condition. Though FIG. 1 illustrates only one facility 2, there are multiple facilities 2. The number of facilities 2 is unspecified.

### <Configuration of Sensor Node 10>

The sensor node 10 includes at least one sensor 11 to monitor abnormalities of the multiple facilities 2. In addition to the sensor 11, the sensor node 10 includes a power supply unit 12 and a communication unit 13, for example.

The sensor 11 detects, as detection targets, any one or more of sound, vibration or acceleration, angular velocity, temperature, humidity, magnetism, light, peripheral image, flow rate, pressure, and odor, for example. Multiple sensors 11 are used to provide a composite sensor in the case of detecting more than one detection target or detecting multiple instances of the same detection target. The sensor 11 may be configured as anything such as a semiconductor sensor. The sensor 11 outputs, as sensor data, a sensing signal, for example, indicating the detection result to a communication unit 13. The sensor data from the sensor 11 is comparable to data indicating various states such as physical quantities used to monitor the states of the facility 2.

The applicable sensor 11 is applied to any of the above-described detection targets. For example, the sensor 11 is applied as a sound sensor to detect sound, a vibration sensor to detect vibration and acceleration, an angular velocity sensor to detect angular velocity, a temperature/humidity sensor to detect the temperature and humidity of the surrounding atmosphere, and a flow sensor to detect surrounding air volume. The sensor 11 is applied as a magnetic sensor to detect magnetism, a light sensor to detect light, and an image sensor composed of a camera, for example, to detect surrounding images. Moreover, the sensor 11 is applied as a flow sensor to detect flow rate, a pressure sensor to detect pressure, and an odor sensor to detect odor. As above, the sensor 11 may be applied to multiple types of different detection targets or multiple instances of the same detection target. Even when the multiple sensors 11 detect the same detection target, it is possible to acquire sensor data corresponding to different directions or positions to be detected, if any.

The sound sensor may use multiple microphones to locate a sound source. A method of locating the direction may use a phase difference or time difference or may use a sound pressure difference based on sensitivity differences resulting from orienting multiple microphones, having the same polar pattern or directivity, in different directions. For example, suppose one direction of the sensor node 10 is front, the opposite direction is rear, and the directions toward both sides are right and left. Then, the sound sensor orients four unidirectional microphones in four directions, front, rear, right, and left. For example, a sound input from the left causes differences in the input sound pressures due to sensitivity differences such as a large sound pressure in the left microphone, a medium sound pressure in the front and rear microphones, and a small sound pressure in the right microphone. It is possible to determine the direction of the sound source based on a predetermined polar pattern.

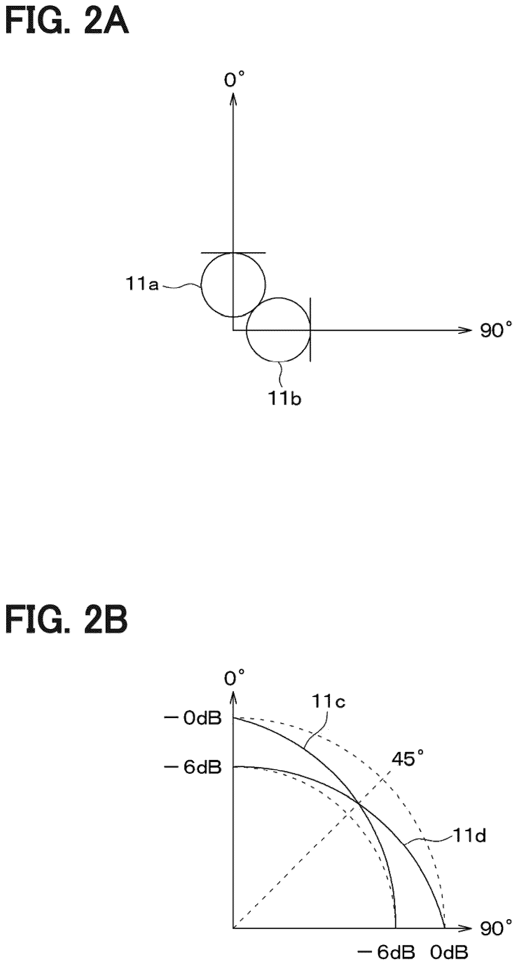

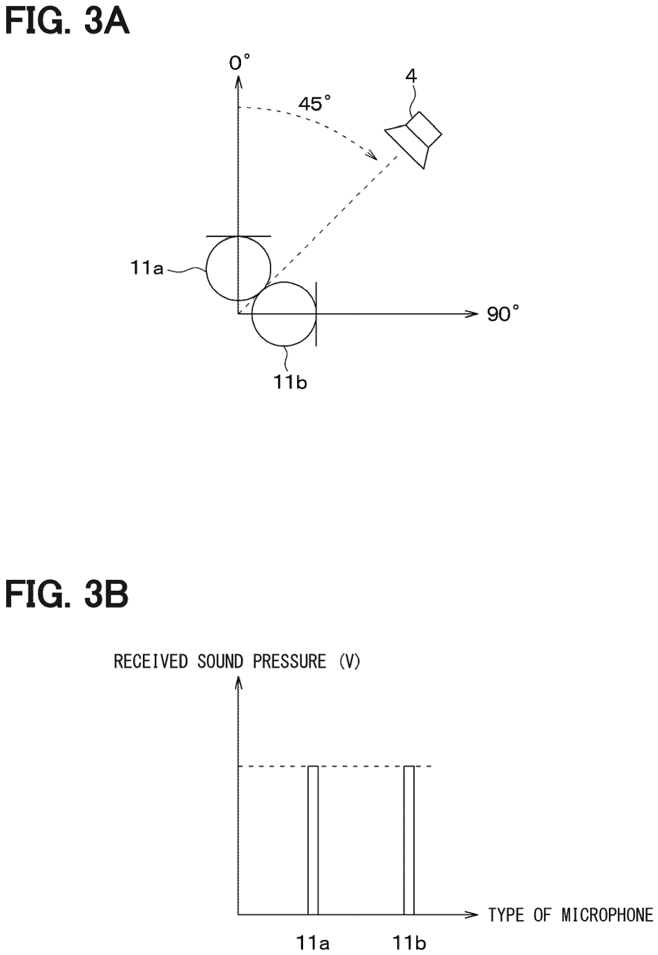

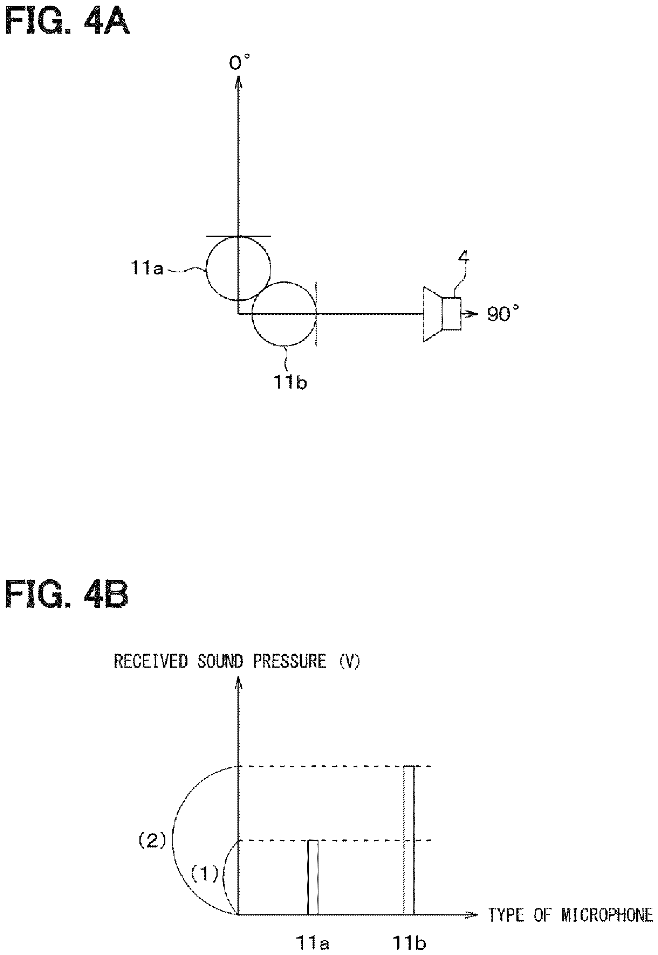

The description below explains an example of identifying the direction of a sound source by using two microphones. As illustrated in FIG. 2A, two microphones 11a and 11b are positioned to shift each directivity 90°. As illustrated in FIG. 2B, a polar pattern 11c of the microphone 11a assumes a reference sound pressure of 0 dB at the position of 0°, namely, the position in the positive direction of the y-axis and gradually decreases the sound pressure until the position of 90°, namely, the position in the positive direction of the x-axis. Contrastingly, a polar pattern 11d of the microphone 11b assumes the reference sound pressure of 0 dB at the position of 90°, namely, the position in the positive direction of the x-axis and gradually decreases the sound pressure until the position of 0°, namely, the position in the positive direction of the y-axis. In this case, for example, suppose the sound source 4 is placed at a position of 45° between the x-axis and the y-axis as illustrated in FIG. 3A. Then, the microphones 11a and 11b receive almost the same sound pressure as illustrated in FIG. 3B. For example, suppose the sound source 4 is placed at the position of 90° on the x-axis as illustrated in FIG. 4A. Then, the microphone 11b receives a sound pressure approximately twice as large as the sound pressure received by the microphone 11a as illustrated in FIG. 4B. The orientation of the sound source 4 can be identified by comparing the sound pressures received by the microphones 11a and 11b that are positioned to change the directivity. It is also possible to determine the distance from the sound pressure to the sound source 4. The sound sensor using the multiple microphones 11a and 11b can identify the direction and the distance of the sound source 4.

The vibration sensor can detect a transport path backlash the sound sensor cannot detect. The vibration sensor can detect the vibration or acceleration of detection targets. The vibration sensor can detect an abnormality of the detection target based on the vibration or acceleration. The vibration sensor can detect the vibration of the transport path equipped with the sensor node 10. The vibration sensor and the sound sensor provided as the sensor 11 can further determine whether the vibration originates from the transport path. It is possible to determine that an abnormality originates from the transport path when the abnormality is detected based on data of detection results acquired by the vibration sensor and the sound sensor or based on data acquired only by the vibration sensor. It is possible to determine that an abnormality originates from factors other than the transport path when the abnormality is detected only by the sound sensor. It is possible to distinguish the transport path more clearly from other factors and identify the facility 2 where the abnormality is detected.

The angular velocity sensor can detect, as an angular velocity, changes in the rotation and the orientation of a monitoring target to be monitored. Abnormalities in the monitoring target can be detected based on the rotation and the orientation of the monitoring target detected by the angular velocity sensor. For example, the sensor node 10 may be attached to the transport path to carry products or to a product carried by the transport path. In such cases, the angular velocity sensor can detect changes in the tilt or the attitude of the transport path and the product.

The angular velocity sensor is available as at least one of the following: a 1-axis angular velocity sensor to detect rotation in one direction, a 2-axis angular velocity sensor to detect rotation in two mutually orthogonal directions, and a 3-axis angular velocity sensor to detect rotation in three mutually orthogonal directions.

The optical sensor may use multiple light-receptive portions to identify the position of a light source. A method of locating the direction may use a phase difference or time difference of the light or may use a difference in the amount of light received based on multiple light-receptive portions oriented in different directions. For example, the sensor node 10 may be configured to orient the light-receiving portions in four directions such as forward, backward, right, and left. For example, the light input from the left causes differences in the amount of light received such as a large amount of light received at the left light-receptive portion, a medium amount of light received at the front and rear light-receptive portions, and a small amount of light received at the right light-receptive portion. It is possible to identify the direction of the light source based on the differences in the amount of light received.

The power supply unit 12 supplies power to each component included in the sensor node 10 and is available as a button battery or a lithium battery, for example. The power supply unit 12 is divided into the following techniques: the use of magnetic fields such as electromagnetic induction, magnetic field coupling, electric field coupling, and radio wave reception; energy harvesting such as vibration, light, heat, and electromagnetic waves; and mobile battery power supply. When the sensor node 10 is used as a transport object, for example, the power supply unit 12 may accordingly conform to an optimum power supply technique based on factors required of the transport object such as power, transmission distance, and size, for example.

The communication unit 13 transmits sensor data transmitted from the sensor 11 to the reception unit 20 through the use of wireless communication, for example. The communication unit 13 selects a frequency band to be used based on communication speed, communication distance, or optimal frequency diffraction characteristics of the communication unit 13, for example. A microcomputer may be mounted on the communication unit 13 to provide various controls based on sensing signals from the sensor 11. When the sensor 11 is used as a sound sensor, for example, the communication unit 13 may control the sensor data transmission to enable the communication only when the sound pressure at a given frequency exceeds a predetermined threshold.

It is preferable to extend the battery life of the power supply unit 12 even if the battery capacity is unchanged. Instead of constant data communication, it is preferable to provide control such as transmitting given data and only preceding and succeeding data when triggered by an excess of a threshold predetermined for the microcomputer of the communication unit 13. For example, the preceding and succeeding data to be transmitted may be appropriately defined as the amount of data comparable to ten cycles before and after the pertinent data. It is thus possible to reduce the amount of communication and extend the battery life of the power supply unit 12.

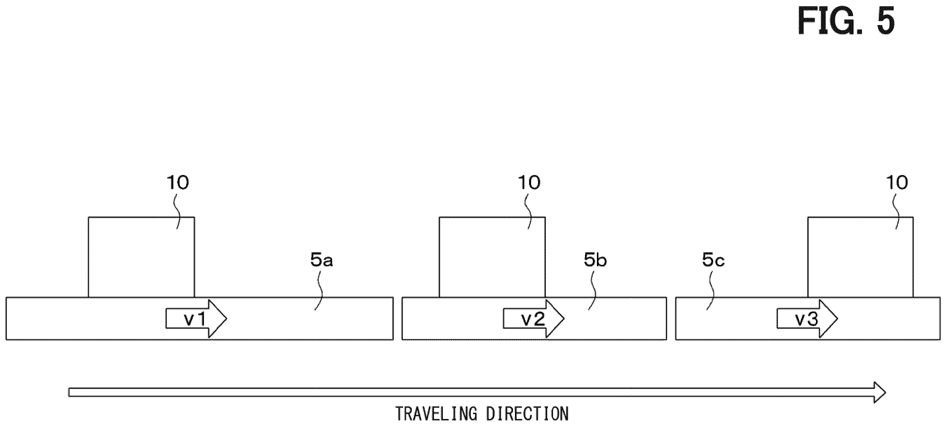

Sensor data transmitted from the sensor 11 to the communication unit 13 may be equal to the sensor data detected by the sensor 11. Namely, the sensor data received by the communication unit 13 may be a raw value. In such cases, the communication unit 13 may process the sensor data and transmit it to the reception unit 20. By reference to FIG. 5, the description below explains an example where the communication unit 13 processes and transmits sensor data.

According to this example, as illustrated in FIG. 5, the sensor node 10 including a vibration sensor is positioned to flow over three transport paths 5a, 5b, and 5c. The three transport paths, namely, the first transport path 5a, the second transport path 5b, and the third transport path 5c are connected in this order and move at different transport speeds to transport the sensor node 10 in synchronization with the transport speed at which each transport path operates. In this case, the communication unit 13 may transmit sensor data received from the sensor 11 to the reception unit 20 corresponding to the transport speed of each of the first transport path 5a, the second transport path 5b, and the third transport path 5c.

For example, the transport speed of the first transport path 5a is defined as first velocity v1. The transport speed of the second transport path 5b is defined as second velocity v2. The transport speed of the third transport path 5c is defined as third velocity v3. The first velocity v1 is assumed to be slower than the second velocity v2 and the third velocity v3. In this case, the vibration due to operations of the first transport path 5a causes the vibration cycle to be slower than the vibration due to operations of the second transport path 5b and the third transport path 5c. The sampling frequency of the vibration sensor, needed to detect an abnormality occurrence or symptom in the first transport path 5a, can be smaller than the sampling frequency needed to detect the same in the second transport path 5b and the third transport path 5c.

The communication unit 13 need not transmit, to the reception unit 20, raw values of sensor data detected at the same sampling frequency in all of the first transport path 5a, the second transport path 5b, and the third transport path 5c. For example, down-sampling may be applied to raw values of sensor data detected in the first transport path 5a whose transport speed is slower than that of the second transport path 5b and the third transport path 5c. Then, the down-sampled sensor data may be transmitted to the reception unit 20. It is possible to reduce the amount of sensor data transmitted from the communication unit 13 to the reception unit 20, reduce the amount of communication, and improve the battery life of the power supply unit 12.

The operator 3 may be able to predetermine a sampling frequency of the down-sampling process according to the transport speed of each of the first transport path 5a, the second transport path 5b, and the third transport path 5c. Alternatively, the communication unit 13 may determine a sampling frequency of the down-sampling process based on a control map previously specified in the communication unit 13 based on respective transport speeds and sampling frequencies of the first transport path 5a, the second transport path 5b, and the third transport path 5c. Moreover, the communication unit 13 may determine a sampling frequency of the down-sampling process based on transport speeds of the first transport path 5a, the second transport path 5b, and the third transport path 5c. The sensor node 10 is used for a detection operation that detects the transport speed of each of the first transport path 5a, the second transport path 5b, and the third transport path 5c. In this case, the communication unit 13 down-samples the sampling frequency of a lower-speed transport path referring to the sampling frequency of a higher-speed transport path.

### <Configuration Example of Sensor Node 10>

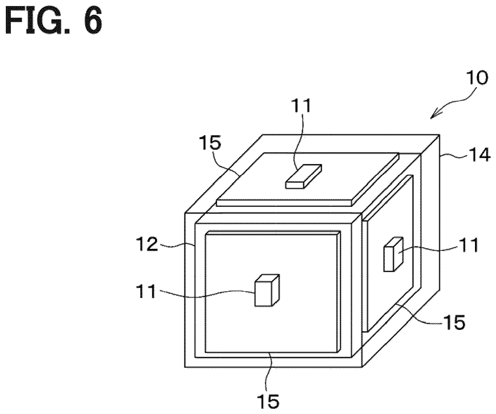

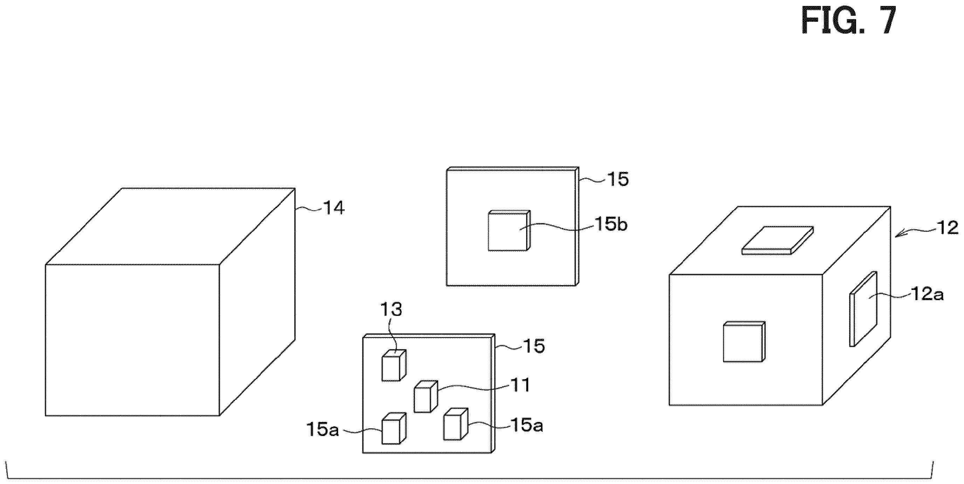

The description below explains an example of configuration of the sensor node 10 by reference to FIGS. 6 and 7.

FIG. 6 illustrates an overall configuration of the sensor node 10 when the sensor 11 is configured as a composite sensor. As illustrated in the drawing, the sensor 11, the power supply unit 12, and the communication unit 13 are integrated into a polyhedral shape, namely, a hexahedral shape. The integral structure is housed in a hexahedral housing 14 to be in contact with the inner wall surfaces of the housing 14 without leaving any gaps and is thereby firm ly secured to the housing 14, thus configuring the sensor node 10. The housing 14 is made of a material appropriate for the usage environment. For example, the housing 14 is designed through the use of water-resistant material to protect the sensor 11 when the sensor node 10 is used in an environment subject to moisture. In FIG. 6, the housing 14 is illustrated transparently to easily understand the integrated structure of the sensor 11, the power supply unit 12, and the communication unit 13 placed in the housing 14.

When the sensor node 10 includes a vibration sensor to detect vibrations of transport path 5, the sensor node 10 detects vibrations of the transport path 5 due to operations of the transport path 5. However, a vibration caused by influences other than operations of the transport path 5 can be identified as a noise in the vibration of the transport path 5 detected by the vibration sensor.

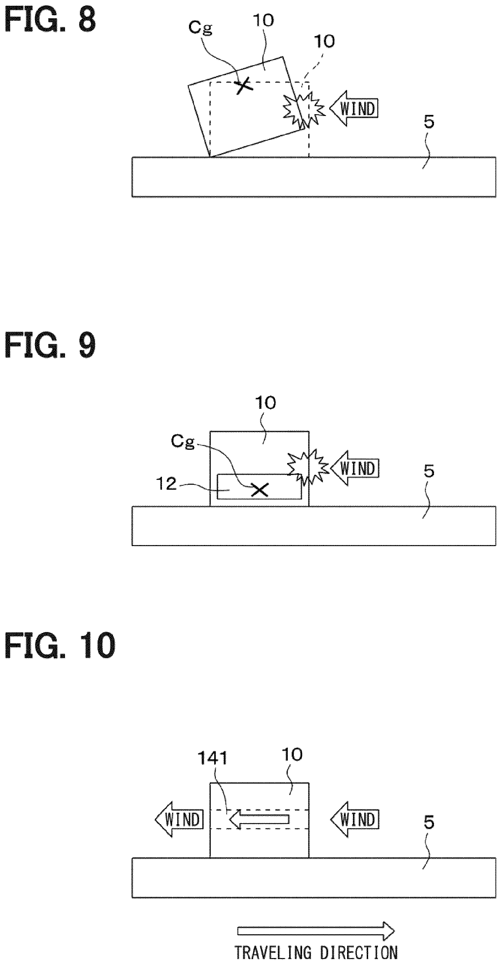

As illustrated in FIG. 8, for example, the sensor node 10 includes the center of gravity Cg above the center of the sensor node 10 in the vertical direction. In this case, the wind flowing against the sensor node 10 may impact the sensor node 10 and may vibrate the sensor node 10 itself. The sensor node 10 vibrates due to the impact of the wind and detects its vibration other than the vibration of the transport path 5. Then, the vibration of the sensor node 10 itself is identified as a noise in the vibration of the transport path 5 detected by the sensor node 10.

Suppose the sensor node 10 includes a sound sensor to detect sound around the sensor node 10. The sensor node 10 detects a change in the sound pressure of the environment around the sensor node 10 as a vibration of the air in the environment around the sensor node 10 due to the generation of the sound. However, a vibration in the air due to effects other than the sound pressure can be identified as a noise in the air vibration detected by the sound sensor. For example, suppose the wind flows in the environment around the sensor node 10 and vibrates the air in the environment around the sensor node 10. Then, a vibration caused by the wind is identified as a noise in the air vibration as sound detected by the sensor node 10. A sound may be generated by the wind that flows against and impacts the sensor node 10. The sound is also identified as a noise in the sound, detected by the sensor node 10, in the environment around the sensor node 10.

The wind causing a noise in the vibration includes the natural wind flowing in the environment around the transport path 5 or a vertical laminar flow generated by an air-blowing process in the middle of the transport path 5 or by a fan installed in a clean room, for example.

Considering a wind flowing against the sensor node 10, the sensor node 10 may include a vibration suppression structure that inhibits the sensor node 10 from vibrating due to factors other than the vibration of the transport path 5. As illustrated in FIG. 9, the vibration suppression structure may position the center of gravity Cg of the sensor node 10 below the center of the sensor node 10 in the vertical direction.

Specifically, the vibration suppression structure may position the power supply unit 12 below the center of the sensor node 10 in the vertical direction from the viewpoint that the power supply unit 12 is a relatively heavy component in the sensor node 10. It is possible to shift the center of gravity Cg of the sensor node 10 below the center in the vertical direction.

The housing 14 may be made of multiple materials with different masses per unit volume. In such cases, the vibration suppression structure may be configured so that, in the vertical direction, the lower part of the housing 14 is formed of a material with a large mass per unit volume, and the upper part is made of a material with a small mass per unit volume. It is possible to shift the center of gravity Cg of the sensor node 10 below the center in the vertical direction.

Although not shown, the vibration suppression structure may be configured so that the lower part of the housing 14 is larger than the upper part thereof to shift the center of gravity Cg of the sensor node 10 toward the bottom in the vertical direction. Alternatively, the vibration suppression structure may be configured so that a weight member is attached below the vertical center of the housing 14 of the sensor node 10 to shift the center of gravity Cg of the sensor node 10 toward the bottom in the vertical direction.

The sensor node 10 is preferably configured to include the vibration suppression structure. It is thus possible to improve the stability of placement of the sensor node 10 on the transport path 5 even if the wind flows against the sensor node 10. It is possible to reduce the vibration of the sensor node 10 itself caused by the wind that flows against and impacts the sensor node 10.

As illustrated in FIG. 10, the vibration suppression structure may conform to a fluid design hardly susceptible to the wind even if the wind flows against the sensor node 10. Specifically, the vibration suppression structure may include a through-hole 141 that is formed in a direction corresponding to the direction of the wind, if any, flowing against the sensor node 10.

For example, suppose the wind flows against the sensor node 10 from the front to the rear in the traveling direction of the transport path 5. In such cases, the through-hole 141 may be formed along the traveling direction of the transport path 5, namely, the flowing direction of the wind.

The through-hole 141 provided for the sensor node 10 can allow the wind to flow through from the front to the rear in the traveling direction of the transport path 5 even if the wind flows against the sensor node 10. It is possible to reduce the vibration of the sensor node 10 itself caused by the wind that flows against and impacts the sensor node 10.

The through-hole 141 allows the wind to flow through, making it possible to inhibit the generation of noise caused by the wind impacting the sensor node 10. The sound sensor can easily detect sounds in the environment around the sensor node 10 even if the sound sensor is attached to the housing 14 at the rear or side referring to the traveling direction.

The through-hole 141 may be slanted upward, downward, leftward, or rightward, from the front to the rear in the traveling direction of the transport path 5 if the wind flowing from the front to the rear in the traveling direction thereof can pass through the through-hole 141. The fluid design structure hardly susceptible to the wind flowing against the sensor node 10 may differ from the configuration that forms the through-hole 141 in the sensor node 10. Although not shown, for example, the housing 14 of the sensor node 10 may be shaped to gradually decrease the cross-sectional area of the housing 14 from the rear to the front in the traveling direction of the transport path 5 on condition that the cross-sectional area is perpendicular to the traveling direction. Thus, it is possible to reduce the effect of the wind against the sensor node 10.

As illustrated in FIG. 5 and the like, for example, the integrated structure including the sensor 11, the power supply unit 12, and the communication unit 13 is shaped into a hexahedron. The hexahedral shape can easily orient the sensor node 10 or the sensor 11. The integrated structure is not limited to a hexahedron. Other polyhedral shapes may also be used.

Even when placed at a specific location, the sensor node 10 can monitor multiple facilities 2. The sensor node 10, configured as a composite sensor, can more comprehensively monitor multiple facilities 2. When attached to a mobile object, the sensor node 10 can movably monitor multiple facilities 2. For example, the sensor node 10 may be used to monitor a production facility. The sensor node 10, when attached to the transport path as a mobile object, can be moved as a transport object. For example, the sensor node 10 may be mounted on a belt conveyor as the transport path. The sensor node 10 can be transported along with a workpiece on the belt conveyor. The sensor node 10 may be mounted on a mobile body such as an AGV (Automatic Guided Vehicle) to monitor the states of the surrounding facility 2 while the sensor node 10 is moved along with the mobile body.

The sensor node 10 may be installed in any manner. If the sensor 11 includes a vibration sensor or a sound sensor, however, it is necessary to reduce noise from the acquired sensor signal. It is preferable to secure the sensor node 10 to an installation location in a manner as reliable as possible, such as welding or screwing. Depending on installation locations, the sensor node 10 may be installed through the use of a magnet or adhesive.

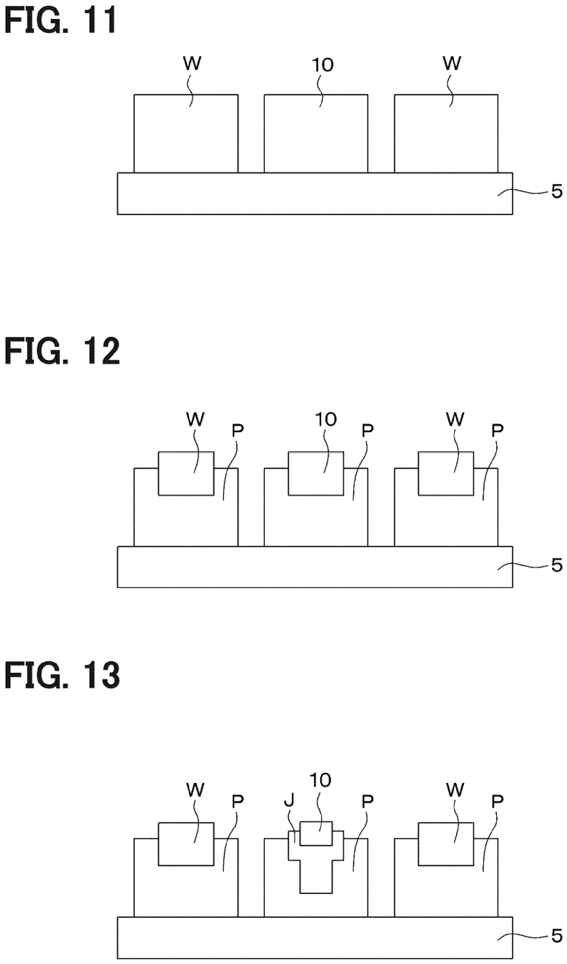

By reference to FIGS. 11 through 18, the description below explains a specific method of placing the sensor node 10 on the transport path 5 along with multiple workpieces W that are placed side by side on the transport path 5 as a moving body and are transported by the transport path 5. The workpiece W may represent an object to be processed by a processing facility, or a product during or after manufacture, for example.

The sensor node 10 placed on the transport path 5 is transported by the transport path 5 along with multiple workpieces W. The sensor node 10 is placed on the transport path 5 by replacing one of workpieces W with the sensor node 10 or attaching the sensor node 10 to one of workpieces W.

FIGS. 11 through 13 illustrate three configurations of replacing the workpiece W with the sensor node 10 while the sensor node 10 and the workpiece W are separated from each other. The three configurations of replacing the workpiece W with the sensor node 10 assume the sensor node 10 to be a transport object instead of the workpiece W as an original transport object on the transport path 5.

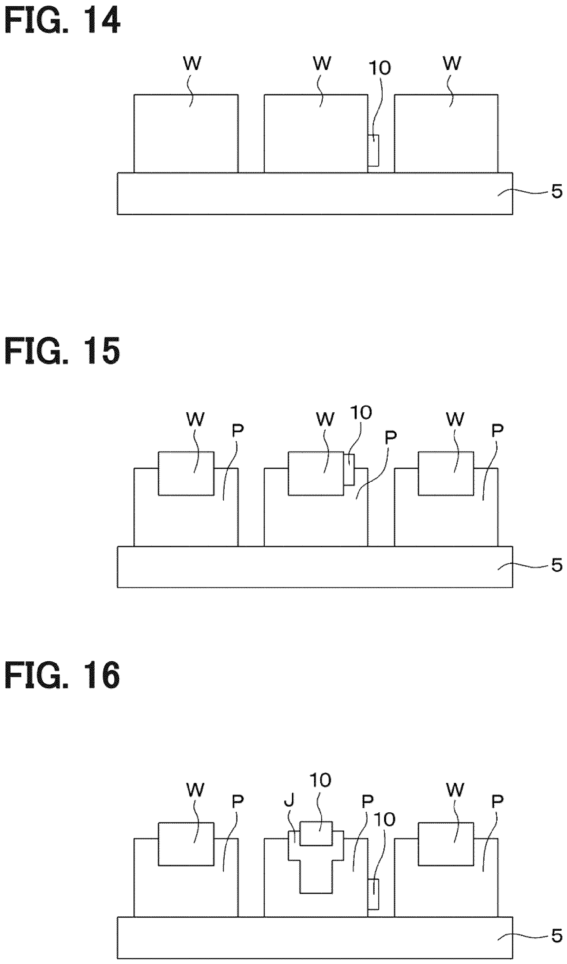

Examples of attaching the sensor node 10 to the workpiece W include one configuration illustrated in FIG. 14 to attach the sensor node 10 to the workpiece W placed directly on the transport path 5 and two configurations illustrated in FIGS. 15 and 16 to attach the sensor node 10 to the workpiece W placed on the transport path 5 via a pallet P. The three configurations of attaching the sensor node 10 to the workpiece W assume the sensor node 10 to be a transport object as well as the workpiece W as a transport object on the transport path 5.

Of the three configurations to transport the sensor node 10 and the workpiece W separately from each other, the first configuration illustrated in FIG. 11 is used when the workpiece W is placed directly on the transport path 5. The sensor node 10 is placed on the transport path 5 and is carried as a transport object.

When the workpiece W is placed directly on transport path 5, the workpiece W may be moved from transport path 5 to the processing facility to process the workpiece W at the processing facility. In this case, the workpiece W is lifted by a chuck facility (not shown) installed around the transport path 5 and is moved to the processing facility, for example.

When the sensor node 10 replaces the workpiece W according to the first configuration illustrated in FIG. 11, the chuck facility holds the sensor node 10 as well as the workpiece W, making it possible to monitor the chuck facility. For example, the sensor node 10 may be configured to include a pressure sensor at a position held by the chuck facility. In such cases, the sensor node 10 can monitor whether the chuck facility operates normally by detecting the pressure to hold the pressure sensor. The sensor node 10 may be configured to include an angular velocity sensor. In such cases, the sensor node 10 can monitor whether the chuck facility operates normally by detecting the attitude of the sensor node 10 when held and lifted by the chuck facility.

Of the three configurations to transport the sensor node 10 and the workpiece W separately from each other, the second configuration illustrated in FIG. 12 is used when the workpiece W is placed on a pallet P to be transported and the workpiece W and the sensor node 10 are equally shaped. In this case, the sensor node 10 replaces one of the workpieces W placed on the pallet P. The workpiece W and the sensor node 10 are placed on the transport path 5 via the pallet P and are transported as transport objects. The second configuration illustrated in FIG. 12 may be applied to a case where the pallet P includes a portion shaped equally to secure the workpiece W and the sensor node 10.

Of the three configurations to transport the sensor node 10 and the workpiece W separately from each other, the third configuration illustrated in FIG. 13 is used when the workpiece W is transported on the pallet P and the workpiece W and the sensor node 10 are differently shaped. In this case, the sensor node 10 replaces one of the workpieces W placed on the pallet P and is seated along with a jig J to secure the sensor node 10 to the pallet P. The sensor node 10 is placed on the transport path 5 via the pallet P and the jig J are transported as transport objects.

FIG. 14 illustrates a configuration to attach the sensor node 10 to the workpiece W that is directly placed on the transport path 5. FIGS. 15 and 16 illustrate two configurations to attach the sensor node 10 to the workpiece W placed on the transport path 5 via the pallet P. The sensor node 10 is attached to the workpiece W placed on the transport path 5 via the pallet P by directly attaching the sensor node 10 to the workpiece W or by attaching the sensor node 10 via the pallet P to the workpiece W. The sensor node 10 is transported as a transport object along with the workpiece W on the transport path 5.

When the sensor node 10 is transported as a transport object along with the workpiece, the processing facility can process the workpiece W to which the sensor node 10 is attached. The sensor node 10 detects states of processing the workpiece W, making it possible to monitor whether the processing facility operates normally. When the sensor node 10 includes a vibration sensor, for example, the sensor node 10 detects vibration while the processing facility processes the workpiece W, making it possible to monitor whether the processing facility operates normally.

In the case of detecting the vibration of the transport path 5 to monitor the transport path 5, the sensor node 10 may include the vibration sensor and may be transported as a transport object along with the workpiece W on the transport path 5. When the sensor node 10 and the workpiece W are placed on the transport path 5, the transport object, a combination of the sensor node 10 and the workpiece W, may vibrate due to a factor other than the vibration of the transport path 5. Then, the vibration sensor may detect noise in the vibration of the transport path 5.

In such cases, the sensor node 10 may be mounted to shift the center of gravity of the transport object, as an integration of the sensor node 10 and the workpiece W, toward the bottom in the vertical direction. For example, the sensor node 10 may be attached to the workpiece W placed directly on the transport path 5. In such cases, the sensor node 10 may be positioned below the center of the workpiece W in the vertical direction as illustrated in FIG. 14. The sensor node 10 may be attached to the workpiece W placed on the transport path 5 via the pallet P. In such cases, the sensor node 10 may be attached to the pallet P instead of the workpiece W, as illustrated in FIG. 16.

It is possible to prevent the transport object, namely, integration of the sensor node 10 and the workpiece W, from easily vibrating due to a factor different from the vibration of the transport path 5. It is possible to suppress vibration noise caused by the vibration of the transport object as an integration of the sensor node 10 and the workpiece W.

The sensor node 10 attached to the workpiece W or the pallet P may detect vibrations of the transport path 5. In such cases, the sensor node 10 may be attached to any position appropriate to detect vibrations of the transport path 5. Specifically, the sensor node 10 may be attached to a position easily subject to a large amount of vibration from the workpiece W or the pallet P when the workpiece W or the pallet P vibrates along with the transport path 5 due to the vibration of the transport path 5. When the workpiece W or the pallet P vibrates integrally with the transport path 5, the workpiece W or the pallet P tends to easily increase the amount of vibration at the position distant from the transport path 5.

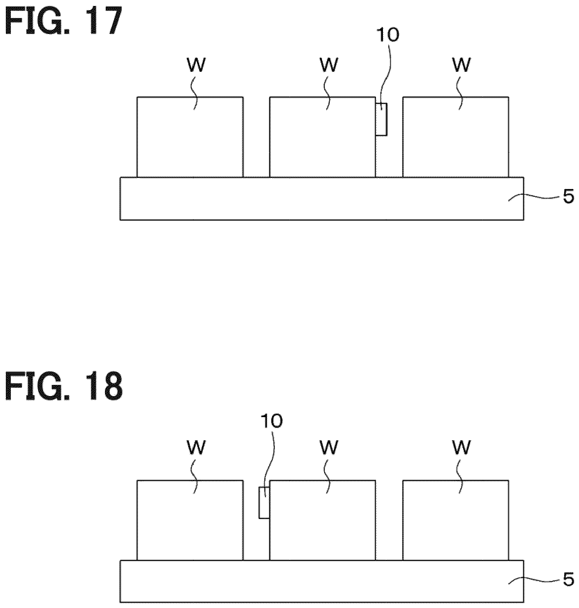

For example, the sensor node 10 may be attached to the workpiece W placed directly on the transport path 5. In such cases, the sensor node 10 may be positioned above the center of the workpiece W in the vertical direction as illustrated in FIG. 17. Although not shown, the sensor node 10 may be attached, via the pallet P, to the workpiece W placed on the transport path 5. In such cases, the sensor node 10 may be attached above the center of the pallet P in the vertical direction.

Compared to a case where the sensor node 10 is not attached as above, it is possible to increase the distance between the transport path 5 and the position where the sensor node 10 is attached to the workpiece W or the pallet P. The sensor node 10 can easily detect vibrations of the transport path 5.

When the transport path 5 transports the workpiece W and the sensor node 10, a stopper (not shown) provided midway through the transport path 5 may stop or start the transport of the workpiece W to process the workpiece W on the transport path 5, for example.

In this case, the stopper operation may control starting and stopping of the transportation of the workpiece W while the transport path 5 keeps operating. The stopper may suddenly stop or start transporting the workpiece W. When the stopper suddenly stops or starts transporting the workpiece W, the rear of the workpiece W in the traveling direction may be lifted by inertia. The movement to lift the workpiece W by inertia can be identified as a noise in the vibration of the transport path 5 to be detected by the vibration sensor when the sensor node 10 is attached to the workpiece W to detect vibration.

The sensor node 10 may be transported as a transport object along with the workpiece W. In such cases, the sensor node 10 may be positioned at the front of the workpiece W referring to the traveling direction in which the transport path 5 transports the workpiece W. For example, FIGS. 14 through 17 illustrate that the workpiece W is transported from the left to the right of the diagram. As illustrated in FIGS. 14 through 17, the sensor node 10 may be placed on the front surface of the workpiece W or the pallet P referring to the traveling direction.

The above-described configuration suppresses the vibration of the sensor node 10 even if the rear of the workpiece W is lifted referring to the traveling direction. It is possible to reduce the influence of noise caused by the vibration of the workpiece W.

There may be a need to detect the behavior of the workpiece W under the condition that the stopper suddenly stops or starts the transportation. In such cases, the sensor node 10 may be positioned at the rear of the workpiece W referring to the traveling direction. For example, FIG. 18 illustrates that the workpiece W is transported from the left to the right of the diagram. As illustrated in FIG. 18, the sensor node 10 may be positioned on the rear surface of the workpiece W referring to the traveling direction.

This configuration easily lifts the sensor node 10 along with the workpiece W when the rear of the workpiece W is lifted referring to the traveling direction. It is possible to easily detect the behavior of the sensor node 10 due to the vibration of the workpiece W.

The sensor node 10 illustrated in FIG. 6 configures a composite sensor including multiple sensors 11 through the use of multiple wireless sensor substrates 15. Specifically, the sensor node 10 configures a composite sensor by placing the wireless sensor substrate 15 on at least one surface of the hexahedral shape. As illustrated in FIG. 7, the wireless sensor substrate 15 includes electronic components 15a such as a resistor, capacitor, and microcomputer in addition to one type of the sensor 11 and the communication unit 13. The wireless sensor substrate 15 has the function of allowing the communication unit 13 to transmit sensor data, indicating detection results from the sensor 11, to the corresponding reception unit 20 based on the power supply from the power supply unit 12. The number of wireless sensor substrates 15 illustrated in FIG. 7 differs from that in FIG. 6 to simplify the illustration. Of the wireless sensor substrates 15 included in the sensor node 10, FIG. 7 shows only the wireless sensor substrates 15 facing toward the foreground and the background from the viewpoint of the drawing.

The power supply unit 12 is placed at the center of the composite sensor. The power supply unit 12 and each wireless sensor substrate 15 are electrically connected to supply the power from the power supply unit 12 and operate the composite sensor. As illustrated in FIGS. 6 and 7, the power supply unit 12 is hexahedral. The wireless sensor substrate 15 is placed on at least one of the six surfaces where sensing is required. A power supply terminal 12a is exposed on at least one of the six surfaces where the wireless sensor substrate 15 is placed. A battery connector 15b is provided on the back side of the wireless sensor substrate 15 to connect with the power supply terminal 12a of the power supply unit 12. Attachment of the wireless sensor substrate 15 to the power supply unit 12 supplies power to the sensor 11 and the communication unit 13, for example.

The power supply unit 12 is shaped to be polyhedral and the wireless sensor substrate 15 is attached to each surface. The power supply unit 12 is positioned at the center of the polyhedral shape of the sensor node 10. Compared to a non-polyhedral shape, the above-described configuration can increase the volume of the power supply unit 12 under the condition of the same number of wireless sensor substrates 15. It is possible to increase the battery capacity of the power supply unit 12 and lengthen the operation time of the sensor node 10. It is possible to minimize the shape of the sensor node 10 and maximize the operation time.

The sensor node 10 is preferably capable of wireless power supply so that battery charge is available while the composite sensor is enclosed in the housing 14. When a wired power supply is used, a charging connector just needs to be connected to one face of the polyhedral shape of the sensor node 10.

The wireless sensor substrate 15 can be installed on all faces of the power supply unit 12 by equally sizing all the wireless sensor substrates 15 or by sizing all the wireless sensor substrates 15 to be smaller than one face of the polyhedral shape of the power supply unit 12. The wireless sensor substrate 15 can be installed on a face appropriate for sensing targets of the sensor 11, for example, a face causing high sensitivity. When shaped into a regular hexahedron, for example, the sensor node 10 can provide a composite sensor capable of mounting six wireless sensor substrates 15.

When the sensor 11 is used as a microphone to detect sound, array signal processing can be used for beamforming by mounting the wireless sensor substrates 15 on the front, back, left, and right sides of the sensor node 10 as the regular hexahedron referring to the moving direction.

The sensor 11 may be used as a temperature sensor or a humidity sensor to detect the temperature or humidity of the environmental atmosphere. In such cases, it is possible to capture the environmental atmosphere by placing the wireless sensor substrate 15 on a face other than the bottom of the regular hexahedron. When the sensor node 10 placed on the transport path, any of the faces other than the bottom of the sensor node 10 is hardly affected by the temperature of the transport path due to heat transfer. The wireless sensor substrate 15 is preferably positioned on the faces other than the bottom face. The sensor 11 may include two temperature sensors and a flow rate sensor. The sensor 11 can allow the flow sensor to measure the air volume around the sensor node 10 and can measure the direction of the wind based on a temperature difference detected by the two temperature sensors. It is possible to manage the downflow inside the facility 2, for example.

The sensor 11 may be used as a vibration sensor. When placed on the top face of the polyhedron, the sensor 11 increases the moment and improves the sensitivity to tilts of the composite sensor. It is possible to detect the subtle inclination of the workpiece and backlash of the transport path and early predict an abnormality symptom in the facility 2.

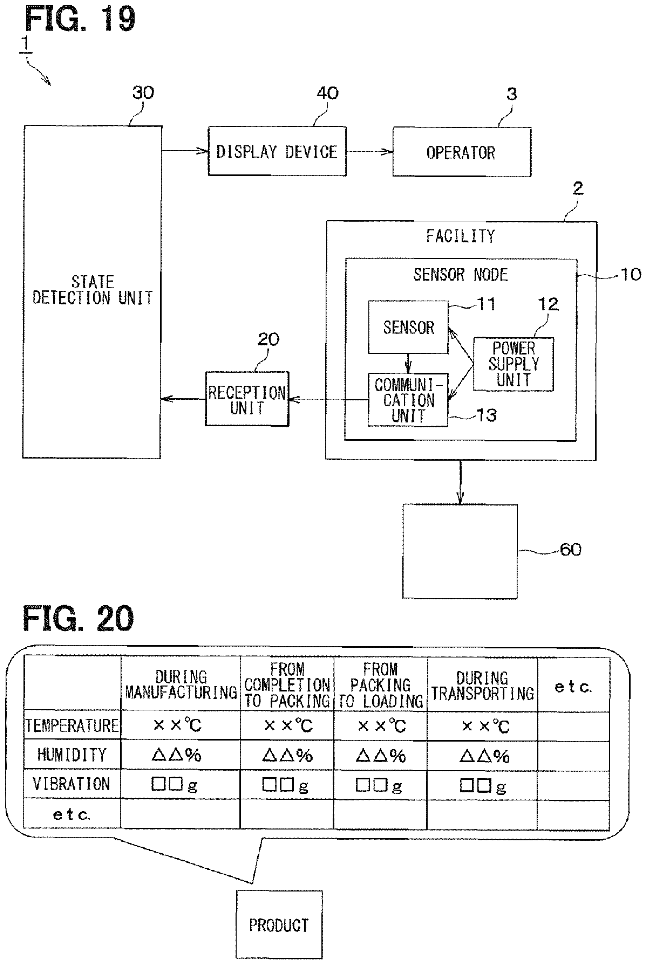

The sensor 11 may be used as a temperature sensor, a humidity sensor, and a vibration sensor. In such cases, the sensor 11, when attached to a product, can be used for a traceability system that manages the history of the product manufacturing or the history of transportation states after the production completion in addition to the monitoring of the state of the facility 2. As illustrated in FIG. 19, for example, suppose the facility state monitoring system 1 includes a server 60 that receives various sensor data detected by the sensor node 10. This server 60 is configured to be able to communicate with the sensor node 10. The server 60 is composed of a microcomputer including, though not shown, a CPU, ROM, RAM, flash memory, and HDD, for example. The server 60 implements various control operations by allowing the CPU to read and execute programs from the ROM, for example. The storage medium such as ROM is a non-transitory tangible storage medium. The server 60 according to the present embodiment functions as a storage unit.

For example, the server 60 stores information by associating the information, as sensor data received from the sensor node 10, with the time to have received the information. The sensor data includes the temperature, humidity, and vibration of the environmental atmosphere during the manufacturing of the product. As illustrated in FIG. 20, the facility state monitoring system 1 can be used as a traceability system to keep track of the history of various types of information during the manufacturing process such as the environmental atmosphere in which the product was manufactured.

The sensor node 10, when attached to the finished product, can allow the server 60 to store information concerning the states of the finished product by associating the time to detect the information with the information as sensor data concerning the finished product, detected by the sensor node 10.

The server 60 can also store the history of various information such as temperature, humidity, and vibration, for example, in the environmental atmosphere during such periods as a packing period from the completion of the product to the packing, a storage period from the packing to the loading on a transport vehicle, and a transportation period during which the product is transported by the transport vehicle. As illustrated in FIG. 20, it is possible to grasp the environmental atmosphere in which the product was stored and transported. The history information stored in the server 60 is not limited to temperature, humidity, and vibration. Depending on the configuration of the sensor 11, the history information may also include sound, acceleration, angular velocity, magnetism, light, peripheral image, flow rate, pressure, and odor, for example.

A display device 40 described later or a display device different from the display device 40 may display the various types of history information stored in the server 60 for the operator 3 concerning the product manufacturing to be capable of viewing. The various types of history information stored in the server 60 may be configured to be viewable by a purchaser who purchased the product. The various types of information detected by the sensor node 10 can also be used as information stored by the traceability system.

The server 60 may be included in the state detection unit 30 described later or may be included in the facility state monitoring system 1 separately from the state detection unit 30. The information about the reception time associated with the sensor data received from the sensor node 10 may be replaced by the time information maintained in the server 60. When the sensor node 10 can acquire time information, the time information transmitted along with sensor data from the sensor node 10 may replace the information about the reception time associated with the sensor data received from the sensor node 10. The information about the reception time associated with the sensor data received from the sensor node 10 may be replaced by information based on the work contents of the operator 3 transmitted from a device (such as an RF-ID reader) independent of the sensor node 10 used by the operator 3 during operations.

When the sensor node 10 is used as a polyhedral composite sensor, multiple sensor nodes 10 can be used to use more wireless sensor substrates 15 than the number of faces of the polyhedral shape.

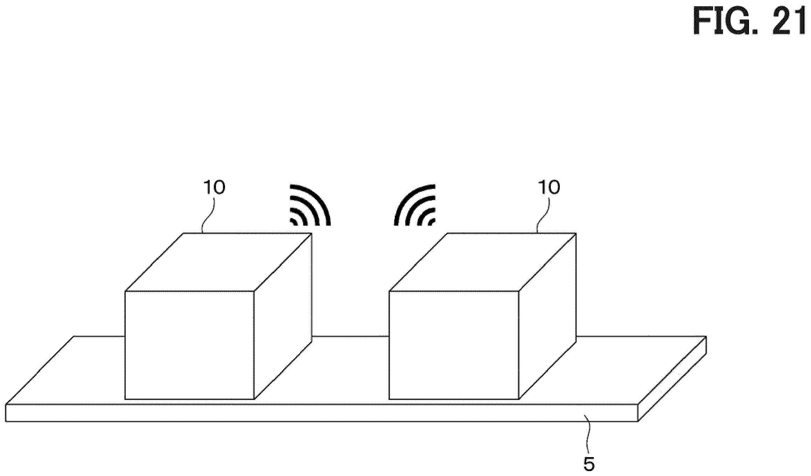

When the multiple sensor nodes 10 are used, for example, microphones are attached to the sensor nodes 10 that are placed at different positions on the transport path 5 to configure a microphone array, as illustrated in FIG. 21. It is possible to measure the distance and position of the source of the detected sound based on a distance between the microphones. In this case, there is no limitation on the distance between the arrayed microphones or the number of microphones that can be selected according to the sound as a detection target. For example, it may be favorable to increase the distance between the microphones if the sound of the remoter facility 2 is settled as a detection target. It may be favorable to increase the number of microphones to locate the sound source more precisely.

The sensor node 10 used as a composite sensor can provide communication between the wireless sensor substrates 15. In this case, the wireless sensor substrates 15 can perform communication to share a trigger that transmits sensor data. For example, the sensor data transmission may be triggered when the detection result from the sensor 11 exceeds a predetermined threshold value. In this case, the wireless sensor substrate 15 placed at the beginning of the direction to move the sensor node 10 acquires the trigger and transmits the acquired trigger to the other wireless sensor substrates 15 by communication. To acquire the trigger, the wireless sensor substrate 15 needs to process sensing signals from the sensor 11 or perform various calculations, thus consuming power. To save power, one wireless sensor substrate 15 is used as the main to acquire the trigger and allows the other wireless sensor substrates 15 to share the trigger. The other wireless sensor substrates 15 can acquire the trigger by consuming only the power required for the communication.

There may be a possibility that the main wireless sensor substrate 15 becomes inactive for some reason. As a countermeasure, it may be favorable to change the main wireless sensor substrate 15 to another when the other wireless sensor substrates 15 detect an abnormality in the main wireless sensor substrate 15 based on the communication with the main wireless sensor substrate 15. Even if the main wireless sensor substrate 15 malfunctions, the other wireless sensor substrates 15 can continue to acquire triggers. It is possible to monitor the facility without stopping the sensing on the sensor 11 provided for the normal wireless sensor substrate 15. The multiple wireless sensor substrates 15 may be provided for one sensor node 10 or multiple sensor nodes 10.

The size of the sensor node 10 depends on the transport path to be used or restrictions on the mounting location.

### <Other Configuration Examples of Sensor Node 10>

According to the configuration illustrated in FIG. 6, one sensor 11 is placed on one wireless sensor substrate 15 and is provided for each face of the hexahedron to configure a composite sensor. Moreover, other structures may configure the composite sensor.

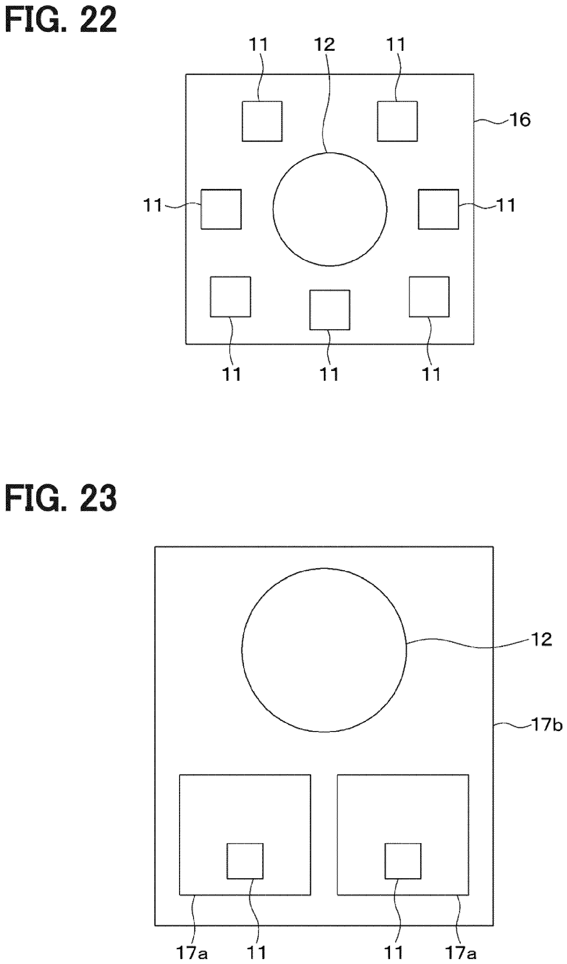

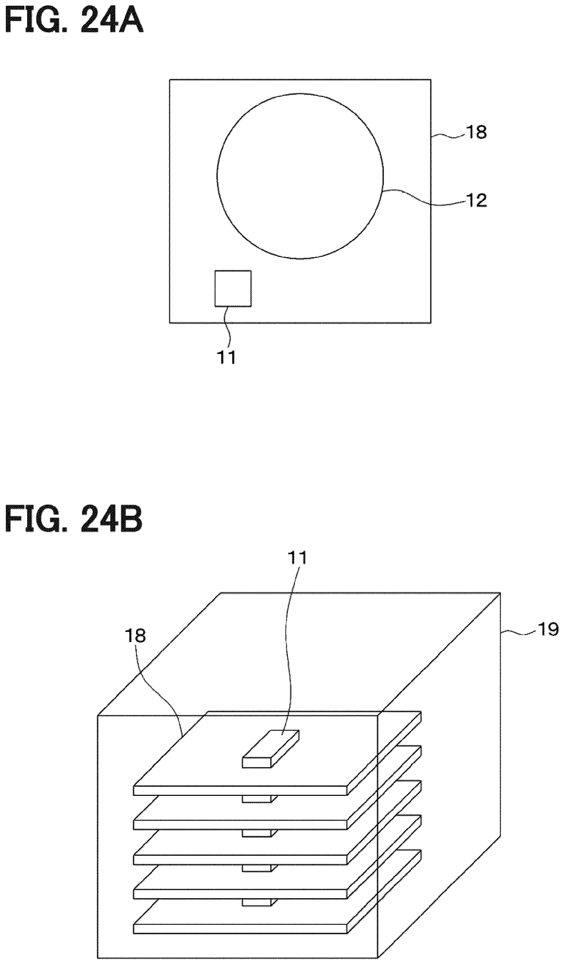

As illustrated in FIG. 22, for example, multiple sensors 11 may be mounted on one substrate 16. In this diagram, the substrate 16 also includes the power supply unit 12 composed of a battery. Multiple sensors 11 are positioned around the power supply unit 12. As illustrated in FIG. 23, a main board 17b may include multiple extension boards 17a each of which includes one sensor 11. According to this diagram, the power supply unit 12 composed of a battery is positioned on an area other than part of the main board 17b where the expansion board 17a is mounted. The expansion boards 17a are positioned around the power supply unit 12. A composite sensor may be configured so that one sensor 11 is mounted on a substrate 18 as illustrated in FIG. 24A and multiple substrates 18 are combined as illustrated in FIG. 24B. For example, it may be favorable to provide a storage box 19 capable of slidably storing multiple substrates 18. The storage box 19 contains multiple boards 18 on each of which the sensor 11 is mounted. As illustrated in FIG. 24A, the power supply unit 12 composed of a battery, for example, may be provided for each substrate 18. Alternatively, the power supply unit 12 may be provided for at least one of the multiple substrates 18 to supply power to the other substrates 18.

If there is a size limit, however, the polyhedral shape as illustrated in FIG. 6 is favorable in consideration of restrictions on power supply from the power supply unit 12 and the number of sensors 11.

A self-diagnosis function of the sensor 11 may be provided for the wireless sensor substrate 15 and the other configuration example of the substrates including the sensor 11. It is possible to improve the reliability of determining abnormality degrees by providing the function to diagnose whether the same sensor sensitivity is ensured between sensor data during learning and sensor data during operation or whether the sensor malfunctions. For example, a temperature correction function may be available based on the self-diagnosis function. The sensor 11 has temperature characteristics and is therefore capable of correcting the sensor sensitivity according to the environmental temperature. It is possible to provide more accurate, effective sensing by performing temperature correction based on the self-diagnosis function even in an environment equipped with a circulating furnace, for example, causing temperature changes.

### <Locating Sensor Node 10>

The sensor node 10 may be installed in the facility 2 or its vicinity and may not be installed on a mobile object. In such cases, the installation location is identified as the position of the sensor node 10.

The sensor node 10 may be provided for a mobile object. For example, the sensor node 10 may be provided as a transport object on the transport path 5. In such cases, it is necessary to locate the mobile object. For example, the transport object may be placed on the transport path 5 moving at a constant speed. In such cases, time is used as a trigger to locate the mobile object. It is possible to grasp how much the sensor node 10 moves based on the moving speed. The sensor node 10 can be located by measuring the elapsed time from the time to start moving the sensor node 10, for example. For example, the sensor 11 using a sound sensor measures the direction in which the sound is transmitted at that time, making it possible to identify the point to be detected. For example, the sensor 11 using an optical sensor may measure the direction in which the light is illuminated at that time, making it possible to locate the sensor node 10 based on the amount of light received. When the transport path does not move at a constant speed, the sensor node 10 may be located by using an image analysis device, an RF-ID reader, or an optical marker, for example, as the sensor 11.

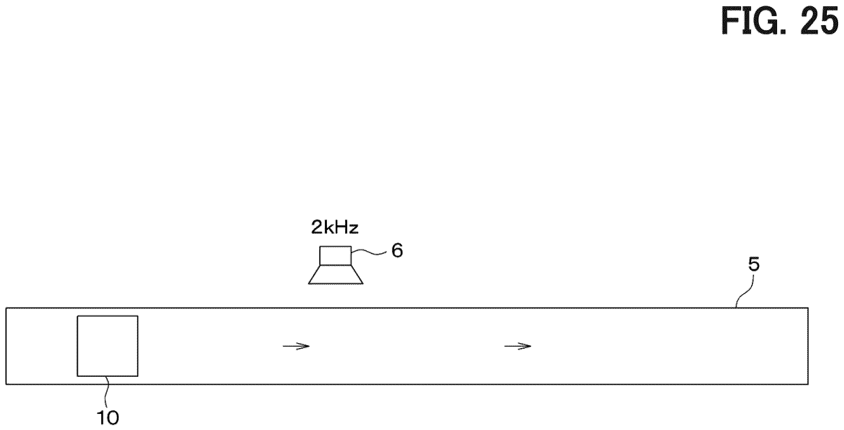

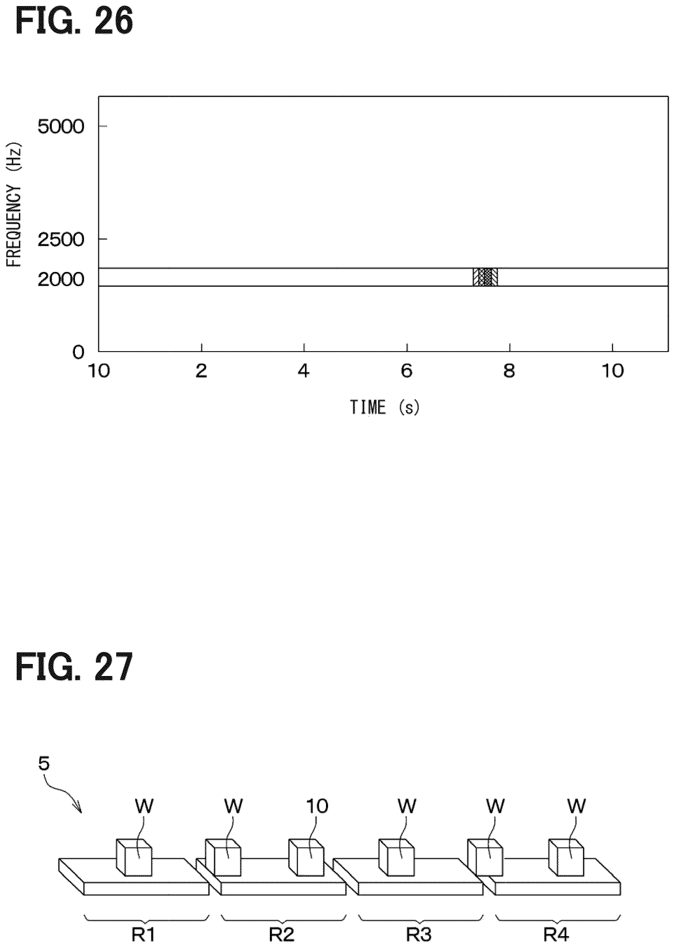

The facility 2 may be equipped with a speaker that generates a sine-wave sound at a given sound pressure, for example. The sensor node 10 can be located when the sensor node 10 most approaches the speaker to detect the maximum sound pressure at a predetermined frequency. As illustrated in FIG. 25, for example, suppose the sensor node 10 is installed on the transport path 5. A speaker 6 as a sound source is installed near the transport path 5. In this case, the sensor node 10 is moved from the left to the right on the transport path 5 as indicated by the arrow in the drawing. Then, the sound pressure is maximized in the vicinity of the speaker 6. Specifically, suppose the speaker 6 generates a 2000 Hz sound. As illustrated in FIG. 26, the sensor node 10 measures the sound pressure at approximately 2000 Hz. As seen from the drawing, the sound pressure is maximized at a time of 7.5 seconds. At this time, the sensor node 10 is assumed to be closest to the speaker 6, making it possible to locate the sensor node 10.

An ultrasonic range can also be used to distinguish between an audible sound and the sound from the speaker 6. In this case, the sensor 11 may use a high-frequency microphone.

The moving transport path 5 may be divided into multiple sections as illustrated in FIG. 27. In such cases, the transport path 5 may be located based on data learned by the state detection unit 30 (described later) concerning the transport path 5 in the normal state. For example, as illustrated in FIG. 27, suppose the transport path 5 is divided into a first transportation section R1, a second transportation section R2, a third transportation section R3, and a fourth transportation section R4. The state detection unit 30 stores models by learning various data representing states of the transport path 5 in the sections from the first transportation section R1 through the fourth transportation section R4. The state detection unit 30 may locate the transport path 5 by comparing the model with the sensor data transmitted from the sensor node 10. Various data representing states of the transport path 5 can include vibration, acceleration, angular velocity, temperature, humidity, electromagnetic field, sound, light intensity, force, torque, and peripheral image, for example, detected by the sensor node 10.

The transport path 5 may be located based on data concerning the transport path 5 learned by the state detection unit 30. In such cases, it is possible to eliminate a device that generates a sound source or a light source for the sensor node 10 to locate positions.

### <Reception Unit 20>

The reception unit 20 receives sensor data transmitted from the sensor node 10 or various signals transmitted from the facility 2, such as facility storage signals and facility operation signals. As illustrated in FIG. 1, the reception unit 20 and the state detection unit 30 described later are separately configured. Alternatively, the reception unit 20 and the state detection unit 30 can also be configured as a device such as a personal computer that includes the reception function and various arithmetic processing functions.

### <State Detection Unit 30>

The state detection unit 30 detects the state of each component of the facility 2 as a monitoring target, detects an abnormality or an abnormality symptom concerning each component of the facility 2, and outputs a detection result to the display device 40, for example. For example, the state detection unit 30 stores models by learning data concerning each component during the normal operation of each facility 2. During abnormality monitoring, the state detection unit 30 acquires data concerning each component of the operating facility 2 and compares the data with the learned model to detect the state of each component. The state detection unit 30 includes this function corresponding to each component as a detection target.

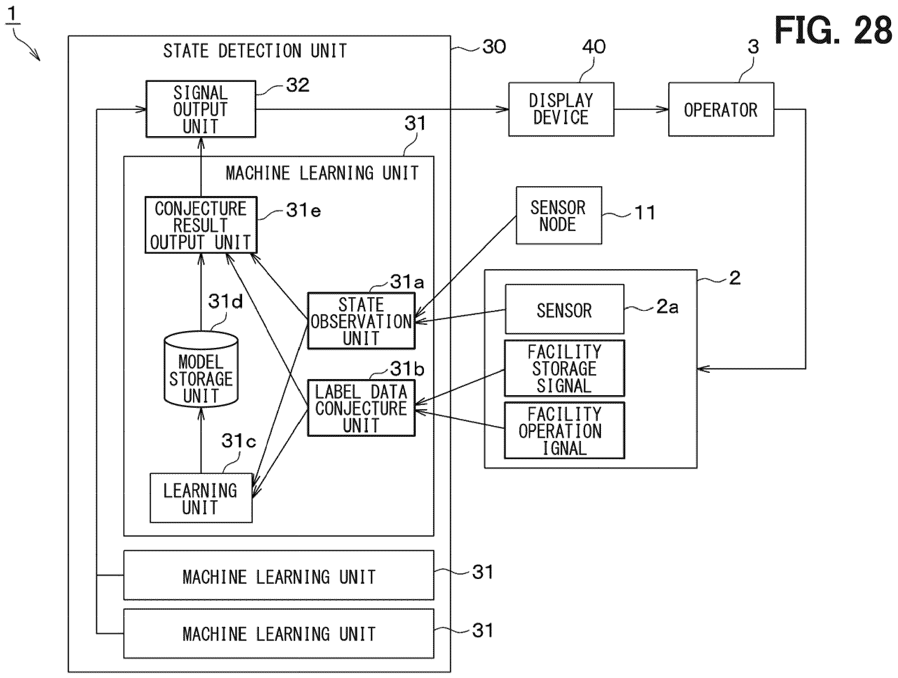

FIG. 28 is a block diagram illustrating details such as functional blocks of the state detection unit 30.

As illustrated in the drawing, the state detection unit 30 includes multiple machine learning units 31 corresponding to the components as detection targets and a signal output unit 32. FIG. 28 illustrates in detail the functional blocks of only one of the multiple machine learning units 31. Practically, there are provided multiple similar block configurations. In the facility state monitoring system 1, the machine learning unit 31 conjectures abnormality occurrences or symptoms in the facility 2. One signal output unit 32 comprehensively processes conjecture results from the machine learning units 31 corresponding to the components, thus providing abnormality monitoring of each facility 2.

The component as a detection target is likely to cause an abnormality in the facility 2 as a monitoring target and needs to be detected based on the sensor data. The component may be comparable to a specific location determined by the operator 3 in the facility 2 or a separated partition corresponding to each facility 2. The operator 3 can easily determine the component as a detection target by focusing on locations or parts that are checked based on the intuition and experience of experts. The intuition and experience can be effectively visualized by having an expert put on glasses capable of detecting the line of sight and observing the inspection work.

The machine learning unit 31 is configured to include a state observation unit 31a, a label data conjecture unit 31b, a learning unit 31c, a model storage unit 31d, and a conjecture result output unit 31e.

The state observation unit 31a is supplied with sensor data transmitted from the sensor node 10, observes the sensor data as a state variable representing the state of the component as a detection target, and transmits the observed data to the learning unit 31c and the conjecture result output unit 31e. The state observation unit 31a can be also supplied with, as sensor data, a detection result indicated by sensing signals from various sensors 2a originally included in the facility 2. In this case, the state observation unit 31a manages the detection result from the built-in sensor 2a similarly to the sensor data transmitted from the sensor node 10 and observes the detection result as the state variable representing the state of the component as a detection target. Physical quantities and states detected by the built-in sensor 2a include voltage, current, position displacement, velocity, vibration or acceleration, temperature, humidity, electromagnetic field, sound, light intensity, force, torque, peripheral image, distance, flow rate, pH, pressure, viscosity, and odor, for example. The sensor 2a included in the facility 2 may be available as a composite sensor or a single sensor. The communication with the state detection unit 30 may be wired or wireless.

The label data conjecture unit 31b acquires, as label data, the facility storage signal and the facility operation signal as practical operation state data of the facility 2 and transmits the label data to the learning unit 31c, for example. The facility storage signal indicates how the facility 2 is processed. The label data conjecture unit 31b stores the facility storage signal when an abnormality is detected in the facility 2 and action is taken against the abnormality according to the detection result from the facility state monitoring system 1. The label data conjecture unit 31b also stores the facility storage signal when the operator 3 directly takes action against the abnormality based on intuition and experience without following the detection result. The facility storage signal is transmitted to the label data conjecture unit 31b to feed back the history. The facility operation signal indicates how the facility 2 operates in response to the process against the abnormality in the facility 2. The facility operation signal indicates how the facility 2 is processed and in which state the facility 2 results. The facility operation signal is labeled data associated with the facility storage signal.

The label data conjecture unit 31b acquires, as operating state data, a trigger to operate the facility 2 through the use of a PLC (Programmable Logic Controller), for example. The operator 3 may acquire the operating state data as data concerning people, equipment, materials, methods, measurements, and environments. The facility storage signal indicates the abnormality occurred in the facility 2 in terms of the month and day of the abnormality occurrence, the identification of the facility 2, the abnormal part of the facility 2, the state of the abnormality, the reason for the abnormality, the identification of the operator 3, and the troubleshooting method taken by the operator 3, for example. The facility operation signal indicates how the facility 2 operates consequently. The label data acquired in the label data conjecture unit 31b may be used only for learning in the learning unit 31c (described later) or may also be used during conjecture in the conjecture result output unit 31e. The label data is transmitted to the conjecture result output unit 31e so that the label data is used for conjecture in the conjecture result output unit 31e.

The learning unit 31c generates a model to estimate the abnormality degree of the component as a detection target based on the state variable indicated by the observation data from the state observation unit 31a or based on the operating state of the facility 2 indicated by the label data from the label data conjecture unit 31b. For example, the learning unit 31c generates a normal-condition model based on various physical quantities and operating states of the normally operating facility 2 as a monitoring target. The learning unit 31c may generate an abnormal-condition model based on various physical quantities and operating states of the facility 2 in the abnormal condition.

The learning data used by the learning unit 31c includes characteristic parts and corresponding chronological data extracted based on at least one of the variation amount, amplitude, variation time, variation count, and frequency of a given physical quantity as well as the amount of deviation from a predetermined value to output the signal indicating an abnormality. The learning may use only one sensor data or the state variable targeted at learning or estimating the set of characteristic parts and chronological data concerning the physical quantities. The learning data also includes the chronological transition of feature quantities acquired by machine learning. For example, the learning data also includes a feature quantity acquired by dimensionality reduction of the unsupervised machine learning such as the principal component analysis and t-SNE (T-distributed Stochastic Neighbor Embedding). Additionally, the learning unit 31c may perform learning by weighting past data through the use of physical quantities. It is possible to generate a model limited to the locations or operations to be monitored more carefully by additionally learning the operating states of the facility 2 acquired by the label data. The learning data may contain only observation data from the state observation unit 31a without label data.

The model storage unit 31d stores a model generated in the learning unit 31c, namely, the learning data as a reference model. Specifically, the learning unit 31c stores the model when the facility 2 as a monitoring target is normal. The model is used as a reference model to estimate the degree of abnormality of the component as a detection target. The model storage unit 31d also stores a model, if available, that is generated by the learning unit 31c as a reference model in the event of an abnormality occurrence.

The conjecture result output unit 31e conjectures the operating states of the facility 2 as a monitoring target during monitoring based on learning data of the stored model. The conjecture result output unit 31e can also conjecture the operating states of the facility 2 by using the input observation data and label data in addition to learning data of the stored model. The operating state here signifies the degree of deviation from the normal state, namely, the amount of deviation from the normal learning data. The conjecture result output unit 31e quantifies the degree of deviation as an "abnormality degree" and outputs it as a conjecture result.

For example, the value of "abnormality degree" is comparable to a determination value acquired by performing statistical processing on changes in raw values of sensor data or values of physical quantities transmitted from the sensor node 10 during monitoring. The "abnormality degree" may represent a change in the determination value or the raw value acquired from one physical quantity detected from one sensor 11 or a change in the composite determination value or raw value based on multiple physical quantities detected from the multiple sensors 11.

The "abnormality degree" can be conjectured in terms of not only present values, namely, values used to determine whether an abnormality occurs presently on the facility 2, but also subsequently assumed values, namely, values used to predict an abnormality on the facility 2. The present "abnormality degree" can be calculated by comparing the present observation data with learning data, for example, The subsequently assumed "abnormality degree" can be also calculated from the present "abnormality degree" by assuming future observation data from the present observation data and comparing the assumed observation data with the learning data. The subsequently assumed "abnormality degree" according to the elapsed time can be calculated by allowing the model storage unit 31d to learn the past operating state data corresponding to the states of the facility 2. The conjecture result output unit 31e outputs the conjecture result to the signal output unit 32.

The signal output unit 32 determines that an abnormality or an abnormality symptom occurs on the facility 2 based on the "abnormality degree" transmitted from the conjecture result output unit 31e. The signal output unit 32 transmits the determination result to the display device 40. For example, the signal output unit 32 previously stores a threshold value corresponding to the "abnormality degree" indicated by the determination value acquired by statistically processing changes in raw values of sensor data or values of physical quantities. The signal output unit 32 determines that an abnormality or an abnormality symptom occurs when the value of "abnormality degree" exceeds the previously stored threshold. The abnormality symptom can also be used to conjecture not only the possibility of abnormality occurrence in the future but also the remaining time until the abnormality occurrence. For example, as above, the calculation of the "abnormality degree" according to the elapsed time can estimate the elapsed time until the "abnormality degree" exceeds the threshold. It is possible to conjecture the remaining time until the abnormality occurrence based on the elapsed time that is estimated in this manner.

The signal output unit 32 can also be conjectured in terms of a location of abnormality occurrence, namely, the component where the abnormality occurs. It is possible to identify which component of the facility 2 is subject to an abnormality or an abnormality symptom based on the "abnormality degree." The signal output unit 32 can identify the value of the abnormality degree for each component, thereby determine the failure location, namely, the component corresponding to the largest degree of abnormality, and determine the location where an abnormality symptom is likely to occur.

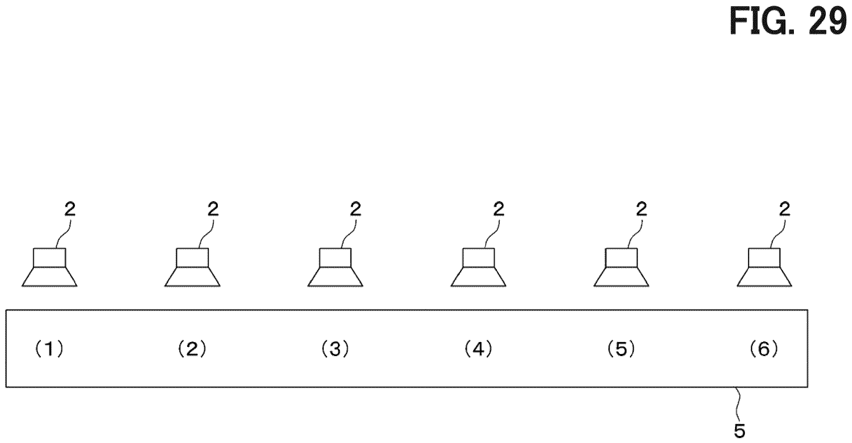

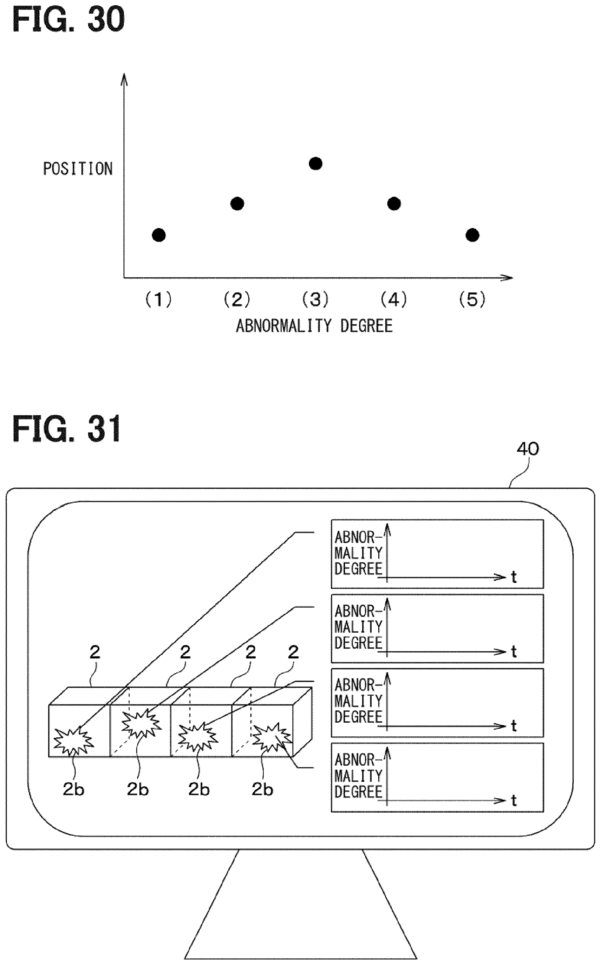

For example, suppose the sensor 11 uses a sound sensor and the sound sensor data contains an abnormal feature quantity. In such cases, attention to the feature quantity can identify the orientation of a sound source through the use of multiple microphones and identify in more detail a location where an abnormality symptom can occur. As illustrated in FIG. 29, for example, suppose the sensor node 10 moves on the transport path 5 to pass in front of each facility 2 and the facility 2 at location 3 generates an abnormal noise. In this case, the sound sensor detects abnormal sound when the sensor node 10 moves from positions 1 to 6. The abnormal sound is detected faintly at positions farther from position 3 and is detected louder at positions closer to position 3. FIG. 30 illustrates the relationship between the "abnormality degree" and the position indicated by the detection result from the sound sensor. It can be seen that the abnormal sound is generated from position 3 of the facility 2 at the highest "abnormality degree." The conjecture result output unit 31e calculates the "abnormality degree" at each position based on the feature quantity of an abnormality appearing in the sound sensor data, namely, the loudness according to the example of FIG. 29. It is possible to compare a threshold used for the generation of abnormal sounds with the "abnormality degree" calculated by the conjecture result output unit 31e and determine that an abnormality occurs on the facility 2 at location 3 where the "abnormality degree" exceeds the threshold. Not limited to the sound sensor as above, other sensors can focus on the feature quantity acquired from sensor data and identify the location corresponding to the occurrence of an abnormality indicative of the feature quantity, if any.

### <Display Device 40>

The display device 40 includes a screen display, for example, and provides displays corresponding to a determination result transmitted from the signal output unit 32. The display device 40 displays an abnormality occurrence or symptom transmitted from the signal output unit 32. Depending on a configuration, the display device 40 can also display the fact that the signal output unit 32 transmits a determination result of no abnormality on the facility 2.

The operator 3 can appropriately specify a display method on the display device 40 such as displaying a name assigned to the location corresponding to an abnormality occurrence or symptom. Incidentally, a 3D mapping display enables the operator 3 to intuitively identify the location concerned. By using an AR (Augmented Reality) display, the operator 3 can visually confirm the location of abnormality symptoms or the recommended recovery content while maintaining the facility 2. When a sound sensor is used for the sensor node 10, the display device 40 may be able to output the sound of the facility 2 detected by the sound sensor. The operator 3 can hear abnormal sounds and audibly confirm an abnormality in the facility 2 while maintaining the facility 2.

As illustrated in FIG. 31, for example, the display device 40 displays a component 2b as a detection target in the facility 2, in a comprehensible form, to the left of the screen display included in the display device 40. The component 2b in the facility 2 may be comparable to a location as a detection target in each of the different facilities 2 or multiple locations as detection targets in the same facility 2. On the right side of the screen display, the display device 40 indicates "abnormality degree" corresponding to each component 2b in association with the elapsed time. The display device 40 enables the operator 3 to identify subsequent changes in the "abnormality degree" of the component 2b in the facility 2 as a focus of monitoring.

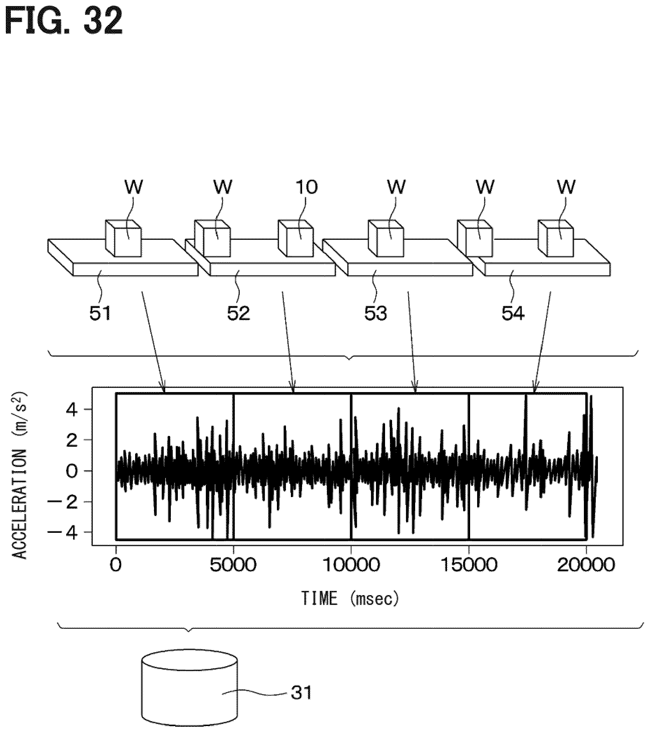

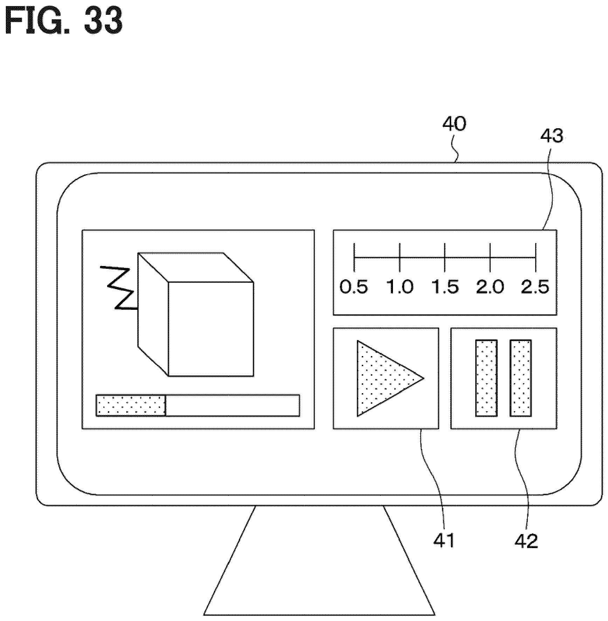

By reference to FIGS. 32 and 33, the description below explains in detail the other example contents displayed by the display device 40 when the facility state monitoring system 1 detects an abnormality occurrence or symptom in the facility 2. The examples illustrated in the drawings use a triaxial angular velocity sensor as the sensor 11 for the facility state monitoring system 1 to detect an abnormality occurrence or symptom on each of a first transport path 51, a second transport path 52, a third transport path 53, and a fourth transport path 54 that are contiguously configured. When the sensor node 10 is transported in the order of the first transport path 51, the second transport path 52, the third transport path 53, and the fourth transport path 54, and angular velocities in three mutually orthogonal directions are detected on each of the first transport path 51 through the fourth transport path 54.

The machine learning unit 31 generates a model to estimate the abnormality degree for each of the first transport path 51 through the fourth transport path 54 based on the information on the operating state of each of the first transport path 51 through the fourth transport path 54 detected by the sensor node 10. The display device 40 displays, as a detection result, the abnormality occurrence or symptom on each of the first transport path 51, the second transport path 52, the third transport path 53, and the fourth transport path 54.

Specifically, the display device 40 displays the detection result corresponding to the time to be transported on each transport paths 51, 52, 53, 54 at which the sensor node 10 is transported on each of the first transport path 51 to the fourth transport path 54. The display content as the detection result may include information on chronological changes in the angular velocity in each of the three directions detected by the triaxial angular velocity sensor; or a three-dimensional model representing chronological changes in the attitude of the sensor node 10 calculated based on the angular velocity in each of the three directions detected by the triaxial angular velocity sensor. The operator 3 can more easily visually identify the abnormal state of the facility 2 when the display content uses a three-dimensional model representing chronological changes in the attitude of the sensor node 10.

When calculating chronological changes in the attitude of the sensor node 10 to generate a three-dimensional model, there may occur an error between the practical attitude of the sensor node 10 and the attitude of the sensor node 10 calculated from the three-dimensional model. The error is likely to accumulate and increase corresponding to an increase in the detection period for the sensor node 10 used to calculate the three-dimensional model.

As a solution, the error may be corrected by additionally providing the sensor node 10 with an angular velocity sensor different from the triaxial angular velocity sensor included in the sensor node 10 or with a sensor (such as a triaxial geomagnetic sensor) different from the angular velocity sensor. There may be a location that uniquely identifies the attitude of the sensor node 10 transported from the first transport path 51 to the fourth transport path 54 in order. In such cases, it may be favorable to reduce accumulated errors by calculating a three-dimensional model of the sensor node 10 based on the uniquely identified attitude of the sensor node 10 as a reference.

The display device 40 displays detection results for each of the first transport path 51 through the fourth transport path 54. Moreover, as illustrated in FIG. 33, the display device 40 may display an image of the sensor node 10 captured by the image sensor.

The angular velocity sensor used as the sensor 11 may be a biaxial angular velocity sensor or a uniaxial angular velocity sensor if it is possible to detect abnormality occurrence or symptom on each of the first transport path 51, the second transport path 52, the third transport path 53, and the fourth transport path 54.

The display device 40 may be able to display chronological changes in the sensor data when an abnormality occurrence or symptom is detected. For example, suppose an abnormality symptom is detected on the first transport path 51. Then, the display device 40 may display sensor data for the first transport path 51 detected by the sensor node 10 for a predetermined period such as one hour ago, one day ago, or one month ago from the detection time, for example. In this case, the display device 40 may be configured to be able to start and stop displaying chronological changes in the sensor data according to manipulation by the operator 3 to manipulate a playback start switch 41 and a playback stop switch 42 displayed on the screen. The display device 40 may be configured to be able to allow the operator 3 to manipulate a playback speed adjustment switch 43 displayed on the screen display and accordingly adjust the percentage of playback speeds to display chronological changes in the sensor data.

The operator 3 can visually confirm changes in the attitude of the sensor node 10 because the display device 40 displays the sensor data detected by the sensor node 10. The operator 3 may need to promptly inspect the facility 2 or take other actions when the facility state monitoring system 1 according to the present embodiment detects an abnormality occurrence or symptom in the facility 2. When the operator 3 inspects the facility 2, it may be necessary to stop operating the facility 2.

Even if the facility 2 does not necessarily require inspection, however, the facility state monitoring system 1 may detect an abnormality occurrence or symptom in the facility 2 due to changes in the external environment. It may be favorable not to stop operating the facility 2 when the facility 2 needs not to be inspected even if the facility state monitoring system 1 detects an abnormality occurrence or symptom in the facility 2.

Even when the facility state monitoring system 1 detects an abnormality occurrence or symptom in the facility 2, the operator 3 can determine the need for inspection of the facility 2 by confirming the sensor data displayed on the display device 40. For example, suppose the facility state monitoring system 1 detects an abnormality symptom in the facility 2. Then, the operator 3 can easily determine the need for inspection of the facility 2 by confirming chronological changes in sensor data. It is possible to avoid the facility 2 from unnecessarily stopping, reduce the facility downtime, and improve the production efficiency.

Abnormalities do not daily occur in the facility 2. It is unlikely that the facility state monitoring system 1 daily detects an abnormality occurrence or symptom. However, it may be favorable for the operator 3 to visually or audibly confirm the sensor data detected by the sensor node 10 on a daily basis. Thereby, the operator 3, even a beginner to conduct the inspection, can easily determine the need for the inspection of the facility 2. The facility state monitoring system 1 can be used to train the operator 3 who inspects the facility 2.

Especially, the determination of abnormality in the facility 2 depends on the sensory determination of the operator 3 and is easily affected by the proficiency level of the operator 3. The operator 3 is allowed to visually or audibly confirm the sensor data needed to determine abnormalities in the facility 2. It is possible to easily hand over sensory determinations of the highly skilled operator 3 to the less skilled operator 3. The facility state monitoring system 1 can train the less skilled operator 3 in terms of the intuition and experience the highly skilled operator 3 gains sensorily.

### <Operations of Facility State Monitoring System 1>

The facility state monitoring system 1 is configured as above. The description below explains operations of the operation of the facility state monitoring system 1 configured as above.

When the facility 2 as a monitoring target is already operating normally, the sensor node 10 transmits the sensor data composed of sensing signals from the sensor 11, for example. The sensor data is received by the reception unit 20 and is transmitted to the state detection unit 30. When the facility 2 includes the built-in sensor 2a, it is also possible to input, as sensor data, a detection result indicated by the sensing signals from the sensor 2a. The operator 3 may need to start operating the facility 2. In such cases, the state detection unit 30 is supplied with the facility storage signal and the facility operation signal as operating state data at that time.

Consequently, the sensor data is input to the state observation unit 31a. The facility storage signal and facility operation signal are input to the label data conjecture unit 31b as well. These data and signals are transmitted to the learning unit 31c that then learns data for each component corresponding to normal operations of the facility 2. A model is thus generated and stored in the model storage unit 31d. The state of the facility 2 can also be learned from the label data, making it possible to generate a model limited to the locations or operations to be monitored more carefully. The sensor node 10 may be moved by being placed on a mobile object such as the transport path 5. In such cases, the position of the sensor node 10 is also identified to generate a model associated with the position of the sensor node 10 at the time the sensor data was acquired.

After the model is stored in the model storage unit 31d, the sensor node 10 is used to monitor an abnormality occurrence or symptom in the facility 2 as a monitoring target. Sensor data from the sensor node 10 and, as needed, sensor data from the sensor 2a included in the facility 2 are transmitted to the state detection unit 30. The sensor data representing each component 2b is transmitted to the conjecture result output unit 31e. The conjecture result output unit 31e compares the data of each component 2b with the learning data as a model. The "abnormality degree" of each component 2b and the "abnormality degree" corresponding to the elapsed time afterward are calculated and transmitted to the signal output unit 32.

The signal output unit 32 compares a previously stored corresponding threshold with the "abnormality degree" of each component 2b transmitted from the construction result output unit 31e. If the present "abnormality degree" exceeds the threshold, it is determined that an abnormality occurs in the facility 2. If the future "abnormality degree" exceeds the threshold, it is determined that an abnormality symptom occurs and an abnormality is likely to occur in the facility 2.

After the signal output unit 32 performs the determination, the determination result such as an abnormality occurrence or symptom is transmitted to the display device 40 and is displayed on the display device 40. If no abnormality occurs, a display is provided to notify that each facility 2 is normal. If an abnormality or symptom occurs, the corresponding facility 2 is displayed. Alternatively, the location corresponding to the abnormality occurrence or symptom is displayed in 3D mapping, for example. When an abnormality symptom occurs, the display device 40 also displays the remaining time until the abnormality occurs.

The operator 3 can confirm whether the facility 2 is normal or abnormal based on the content displayed on the display device 40. The operator 3 can take action against an abnormality occurrence or symptom, if any.

It is possible to identify the location corresponding to an abnormality occurrence or symptom. Therefore, it may be favorable to estimate a replacement part and automatically order the replacement part from the manufacturer. The abnormality symptom can determine the time at which an abnormality will occur. It is also possible to place an order based on the delivery date of replacement parts according to the time of an abnormality occurrence. It is possible to avoid unwanted stock and prepare for maintenance before an abnormality occurs.

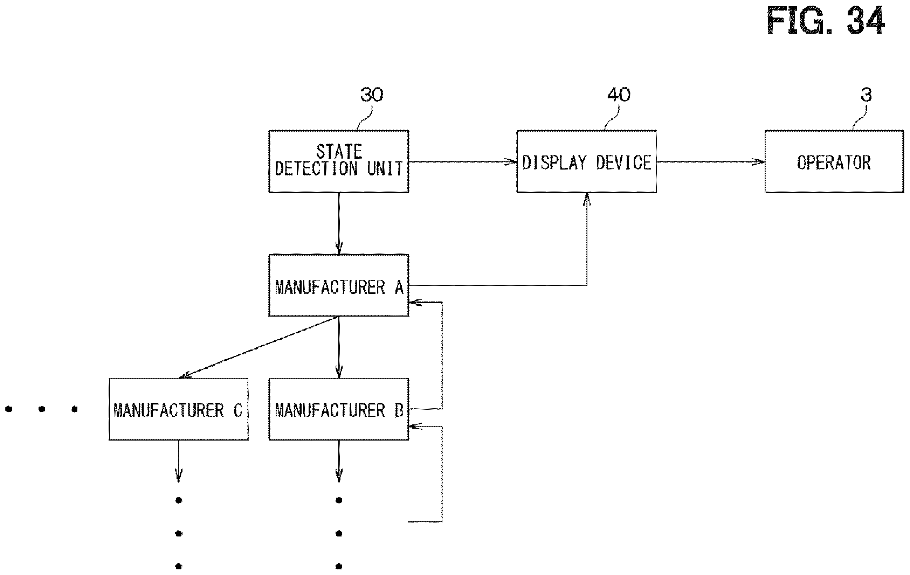

As illustrated in FIG. 34, for example, the state detection unit 30 orders replacement parts from parts manufacturer A that manufactures the replacement parts, while settling on a delivery date. The parts manufacturer A can place an order with parts manufacturers B and C that manufacture parts needed to manufacture the replacement parts, while settling on a delivery date, so that the replacement parts can be delivered in time for the delivery date. Each of the parts manufacturers B and C can also place orders with other related parts manufacturers so that the replacement parts can be delivered in time for the delivery date settled by the parts manufacturer A. It is possible to place an order for replacement parts in advance with each parts manufacturer related to the replacement parts.

When the same product is manufactured on multiple lines, it is also possible to retarget the production quantity for each line based on the abnormality symptom. When an abnormality symptom is detected in one line, for example, the production quantity is retargeted for each line so that the daily or monthly production target quantity can be achieved in the minimum operating time from the time the facility is stopped for maintenance. It is possible to set an appropriate target production quantity that takes into account even an abnormality symptom.

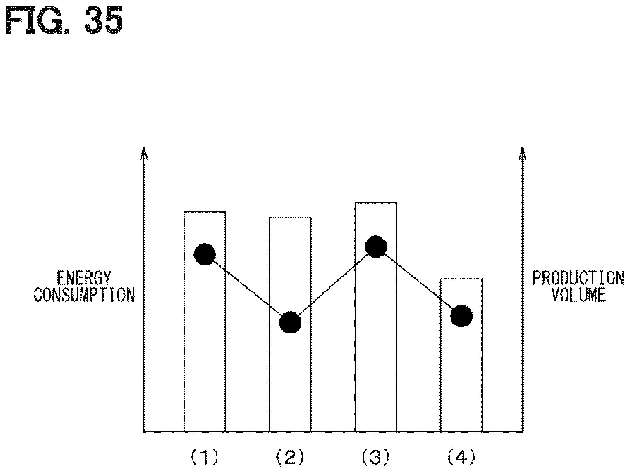

A factory using the facility state monitoring system 1 may provide a diagram of the correlation between the overall energy consumption and the production volume. In such cases, it is also possible to identify the factors of energy usage based on the relationship between the production volume and the energy consumption. For example, suppose a situation as illustrated in FIG. 35, a line graph shows an increase or decrease in the production volume corresponding to the state of operating or stopping parts of the facility 2. However, a bar graph shows that the amount of energy used does not change. Specifically, states 1 and 3 in FIG. 35 show the correlation between the production volume and the energy consumption during the operation of the facility 2. When the facility 2 stops in state 4, the energy consumption decreases as the production volume decreases. However, state 2 shows that the energy consumption does not decrease even though the facility 2 stops and the production volume decreases. In such cases, it is likely that the facility 2 is not involved in the stopped production but consumes a large amount of standby power.

In such cases, the state detection unit 30 indicates a large value for the "abnormality degree" of the component 2b included in the relevant facility 2. The signal output unit 32 determines an abnormality occurrence. It is also possible to detect an abnormality occurrence based on the relationship between the production volume and the energy consumption.

The production volume and the energy consumption correlate when feedback control is provided to maintain the constant operation of the facility 2. However, energy consumption may nevertheless increase more than expected. For example, the facility 2 may gradually increase outputs because of disturbances such as increased friction due to insufficient lubrication or contamination.

It is possible to eventually identify a factor for chronological changes in the energy consumption if the facility state monitoring system 1 detects chronological changes in the production volume and the energy consumption at the facility 2.

As above, the facility state monitoring system 1 according to the present embodiment uses at least one common sensor node 10 to transmit normal sensor data related to the normally operating facilities 2 to the state detection unit 30. The state detection unit 30 is forced to learn, as learning data, the normal states of the facilities 2. It is possible to detect an abnormality occurrence or symptom in the facilities 2 as monitoring targets by comparing the learning data with the states of the facilities 2 indicated by the sensor data transmitted from the sensor node 10 after learning without needing to provide each monitoring target with a vibration sensor.

The "abnormality degree" represents the state of the component 2b in the facility 2 to detect an abnormality occurrence or symptom in each component 2b. It is possible to locate an abnormality occurrence or symptom in the component 2b belonging to which of the facilities 2.

A production facility may include the transport path 5 to transport products. In such cases, the sensor node 10 is regarded as a transport object moving along with the transport path 5 to be able to increase the number of facilities 2 as monitoring targets. It is possible to monitor the state of the facility 2 from the beginning to the end of the manufacturing of products in the production facility. At least one common sensor node 10 can monitor the facilities 2 installed as production facilities.

It is possible to detect an abnormality occurrence or symptom more highly accurately in the facility 2 by providing the sensor node 10 with the sensor 11 as a composite sensor and performing a composite process through the use of multiple sensor data. The composite process may represent a process including the correlation among sensor data, for example.

The "Paris Agreement," an international initiative on climate change issues, effective in 2020, demands efforts to reduce carbon dioxide emissions to achieve carbon neutrality in the second half of this century. There is a growing movement to zero carbon dioxide emissions from factories during the manufacturing process of products. It is important for the reduction of carbon dioxide emissions to eliminate production losses such as facility downtime due to sudden failures or maintenance. The facility state monitoring system 1 described in the present embodiment detects an abnormality occurrence or symptom in the facility 2, making it possible to reduce the amount of carbon dioxide emissions. The facility state monitoring system 1 can order and supply parts before an abnormality occurs, minimize the facility downtime due to maintenance without overstock, and greatly contribute to the reduction of carbon dioxide emissions.

Only one composite sensor, transported on the transport path 5, can monitor the states of multiple facilities 2 without installing sensors in each facility 2. It is possible to appropriately select combinations of types of sensors 11 configuring the composite sensor. The sensor performance can be maximized by changing locations to place the sensors 11 according to the types. The composite sensor may be configured by providing multiple wireless sensor substrates 15. A structure to maximize the sensor performance can be easily available based on placement locations and combinations of the wireless sensor substrates 15.

The sensor node 10 is configured as illustrated in FIGS. 6 and 7 so that the composite sensor is composed of the multiple wireless sensor substrates 15 and is shaped into a polyhedron. The wireless sensor substrate 15 is placed on at least one of the surfaces. The sensor node 10 is structured to include the wireless sensor substrate 15 composed of one type of sensor 11 and the communication unit 13. The sensor node 10 has the function of transmitting sensor data to the corresponding reception unit 20 in response to the power supply from the power supply unit 12. A power supply unit 12 is placed at the center of the composite sensor. Power is supplied by connecting the power supply unit 12 with the wireless sensor substrate 15 to operate the composite sensor.

This configuration can increase the battery capacity of the power supply unit 12 and lengthen the drive time of the sensor node 10. It is possible to minimize the shape of the sensor node 10 and maximize the operation time.

### (Other Embodiments)

While there has been described the specific preferred embodiment of the present disclosure, the disclosure is not limited to the embodiment. The disclosure covers various modified examples and modifications within a commensurate scope. In addition, the category or the scope of the idea of the present disclosure covers various combinations or forms as well as the other combinations or forms including only one element or more or fewer elements in the various combinations or forms described in the disclosure.

For example, the configurations in FIGS. 6, 22, 23, and 24B are used to describe configuration example of the sensor node 10. However, the sensor node 10 may be configured differently from the configurations illustrated in the drawing. For example, FIG. 6 illustrates the sensor node 10 configured as a regular hexahedron. However, the sensor node 10 may be configured as other polyhedral shapes. In FIG. 6 and the like, each wireless sensor substrate 15 is structured to include the sensor 11 along with the communication unit 13. However, each wireless sensor substrate 15 needs not to be equally structured. For example, only one communication unit 13 may be provided for multiple wireless sensor substrates 15. One communication unit 13 may transmit sensor data from the multiple sensors 11.

The above-described embodiment has described the examples of the facility state monitoring system 1 that handles multiple facilities 2 as monitoring targets. However, the important thing is that multiple monitoring targets can be used. The monitoring targets may correspond to different components within one facility 2. For example, the monitoring targets may be composed of different parts such as an XY stage and a processing head in the same facility 2. It is also possible to monitor the states of other systems by using, for example, trained models or conjecture results from the facility state monitoring system 1 described above. For example, the facility state monitoring system 1 may be applied to the same monitoring target. In such cases, a model monitoring target for system construction can be used for learning, for example, and also used to monitor the states of other systems.

The facility state monitoring system 1 described in the above embodiment need not provide the components in one place. For example, the sensor node 10, the reception unit 20, and the state detection unit 30 may be provided in the factory using the facility 2. The display device 40 may be provided outside the factory. It may be favorable to design a configuration in which the state detection unit 30 can transmit data indicating the results to an external cloud, for example, and the display device 40 can incorporate the data from the cloud. The facility state monitoring system 1 is also available in this form.

## Claims

1. A facility state monitoring system comprising:
a sensor node (10) including a sensor (11) configured to output, as sensor data, data indicating a state of a facility (2) as a monitoring target to be monitored, a communication unit (13) configured to transmit the sensor data, and a power supply unit (12) configured to supply power to the sensor and the communication unit, the sensor node (10) being commonly used by a plurality of the monitoring targets;
a receiver (20) configured to receive the sensor data transmitted from the communication unit; and
a state detection unit (30) configured to receive the sensor data received by the receiver, to learn, as learning data, normal states of the monitoring targets based on normal sensor data corresponding to normal operations of the monitoring targets, and in response to the receiver receiving the sensor data transmitted from the sensor node after learning, to compare states of the monitoring targets indicated by the sensor data with the learning data, thereby to detect an abnormality occurrence or symptom in the monitoring targets.

2. The facility state monitoring system according to claim 1
wherein the sensor node is disposed on a mobile object and is moved along with the mobile object to acquire sensor data indicating the states of the monitoring targets; and
wherein the state detection unit (30) is configured to detect the abnormality occurrence or symptom in each of the monitoring targets, thereby to specify a location where the abnormality occurrence or symptom is detected in the monitoring targets.

3. The facility state monitoring system according to claim 2,
wherein the mobile object is a transport path (5); and
wherein the sensor node is disposed on the transport path and is moved along with the transport path, and the state detection unit is configured to detect the abnormality occurrence or symptom in the monitoring targets based on the sensor data output from the sensor during movement.

4. The facility state monitoring system according to claim 3,
wherein the monitoring targets are included in a production facility and the transport path is used to transport a product in the production facility; and
wherein the state detection unit is configured to detect the abnormality occurrence or symptom in facilities provided from the beginning to the end of manufacturing of the product in the production facility as the monitoring targets.

5. The facility state monitoring system according to any one of claims 2 through 4,
wherein the sensor node includes a vibration suppression structure (141) to suppress vibrations different from vibrations of the monitoring targets.

6. The facility state monitoring system according to claim 5,
wherein the vibration suppression structure shifts the center of gravity of the sensor node downward from the center of the sensor node in a vertical direction.

7. The facility state monitoring system according to claim 5,
wherein the vibration suppression structure includes a through-hole penetrating the sensor node in a direction corresponding to a direction of a wind flowing against the sensor node.

8. The facility state monitoring system according to claim 4,
wherein the sensor node is placed on the product transported by the transport path, and the sensor node is positioned on a front side of the product with respect to a traveling direction in which the sensor node moves along the transport path.

9. The facility state monitoring system according to claim 4,
wherein the sensor node is placed on the product transported by the transport path, and the sensor node is positioned on a rear side of the product with respect to a traveling direction in which the sensor node moves along the transport path.

10. The facility state monitoring system according to any one of claims 1 through 9,
wherein the state detection unit includes:
a learning unit (31c) configured to learn, as learning data, at least one of a characteristic part and chronological data included in the sensor data for each component (2b) in each of the monitoring targets based on the sensor data corresponding to the normal operation of the monitoring target;
a model storage unit (31d) configured to store a model of the learning data;
a conjecture result output unit (31e) configured to calculate, in response to the receiver receiving the sensor data transmitted from the sensor node after the learning, an abnormality degree as a quantized degree of deviation from the learning data in at least one of a characteristic part and chronological data represented by the sensor data; and
a signal output unit (32) configured to compare the abnormality degree with a predetermined threshold value to thereby detect the abnormality occurrence or symptom in the monitoring targets, and to output a detection result.

11. The facility state monitoring system according to claim 10,
wherein the conjecture result output unit is configured to calculate, as the abnormality degree, a subsequently assumed abnormality degree in addition to a current abnormality degree at which the sensor data is received; and
wherein the signal output unit is configured to detect the abnormality occurrence based on the current abnormality degree and to detect the abnormality symptom based on the subsequently assumed abnormality degree.

12. The facility state monitoring system according to claim 10 or 11, comprising:
a display device (40) configured to display a detection result that is detected by the state detection unit and is output from the signal output unit.

13. The facility state monitoring system according to any one of claims 1 through 12, comprising:
a storage unit (60) configured to be communicable with the sensor node,
wherein the storage unit is configured to receive the sensor data and store the sensor data in association with information corresponding to the reception time of the sensor data.

14. The facility state monitoring system according to any one of claims 1 through 13,
wherein the sensor node includes a composite sensor provided with a plurality of the sensors; and
wherein the state detection unit is configured to perform a composite processing by using the sensor data output from the sensors and to detect the abnormality occurrence or symptom in the monitoring targets.

15. The facility state monitoring system according to claim 14,
wherein the sensor node includes:
a plurality of wireless sensor substrates (15) including at least one of a plurality of the sensors;
the communication unit disposed on at least one of the wireless sensor substrates; and
the power supply unit having a polyhedral shape,
wherein the sensor node has a polyhedral shape in which the wireless sensor substrates are disposed on one or more of faces of the polyhedral shape of the power supply unit.
